# EUROPEAN PATENT APPLICATION

(11) **EP 4 644 180 A1**
(43) Date of publication of application: **05.11.2025**
(21) Application number: 23911976.1
(22) Date of filing: 22.12.2023
(51) Int. Cl.: B60Q 1/04, F21S 41/29, F21S 45/33, F21S 45/50, F21V 17/00, F21W 102/13

(54) **VEHICULAR HEADLAMP**

(30) Priority: 28.12.2022 JP 2022211963; 28.12.2022 JP 2022212060; 19.01.2023 JP 2023006328; 19.01.2023 JP 2023006542
(71) Applicant: Koito Manufacturing Co., Ltd., Tokyo 141-0001 (JP)
(72) Inventor: TOTSUKA, Takahiro, Shizuoka-shi, Shizuoka 424-8764 (JP); KOMODA, Ryo, Shizuoka-shi, Shizuoka 424-8764 (JP); OKUMURA, Aya, Shizuoka-shi, Shizuoka 424-8764 (JP); SUZUKI, Ryuichi, Shizuoka-shi, Shizuoka 424-8764 (JP); TAKIZAWA, Mamoru, Shizuoka-shi, Shizuoka 424-8764 (JP)
(74) Representative: Grünecker Patent- und Rechtsanwälte PartG mbB
(86) International application number: PCT/JP2023/046127
(87) International publication number: WO 2024/143196

(57) **Abstract**

Provided is a vehicular headlamp (1) comprising a container-shaped lamp body (2) provided with a front opening (2'), and a front cover (4) assembled with the front opening (2') of the lamp body (2) and defining a light chamber (S) on the inner side. On a constituting surface (69) that constitutes the lamp body (2), a cylindrical element (7) is provided protruding. The constituting surface (69) protrudes from at least part of the area on the axially extending outer-peripheral lateral surface of the cylindrical element (7). The constituting surface (69) is curved extending towards the base end or the tip end of the cylindrical element (7), with the constituting surface (69) and the cylindrical element (7) being made unitary. The increased curved surface makes it possible to improve rigidity and reduce thickness.

## Description

### TECHNICAL FIELD

The present invention relates to a vehicle lamp including a lamp body provided with a cylindrical boss.

The present invention relates to a vehicle lamp including, in a lamp body, a bracket that is thin and lightweight and that has sufficient strength.

The present invention also relates to a structure of a lamp body in which a vent hole is formed in the main body of the lamp body.

### BACKGROUND ART

A lamp body is provided with a cylindrical boss as an attachment portion of another member (for example, Patent Literature 1).

In recent years, there has been a demand for weight reduction of a vehicle lamp from the viewpoint of carbon neutrality, and thus there has been a demand for weight reduction of portions of a lamp body on which components are mounted. On the other hand, in recent years, the number of components mounted on the lamp body, such as sensors provided from the viewpoint of improving the safety, has increased in the vehicle lamp, and in particular, there is a demand for increased rigidity in a bracket that is an attachment portion to a vehicle body.

FIGS. 4 and 5 in Patent Literature 2 disclose a lamp body including a vehicle body attachment portion (a bracket) whose rigidity is improved by adding a rib.

The rigidity of the bracket may be increased by additionally forming a rib on the bracket or increasing the thickness of the attachment portion of the bracket base end portion to the lamp body side.

A lamp body is formed with a vent hole (a breathing hole) for communicating ventilation between the inside and the outside of a lamp chamber defined by the lamp body and a front cover (for example, Patent Literature 3).

### CITATION LIST

### PATENT LITERATURE

Patent Literature 1: JP2005-127721A
Patent Literature 2: JP2010-123292A
Patent Literature 3: JP2002-124108A

### SUMMARY OF INVENTION

### TECHNICAL PROBLEM

In recent years, from the viewpoint of carbon neutral, a lamp body capable of ensuring the rigidity while achieving a reduction in thickness and weight is desired.

The present invention has been made in view of the above, and an object of the present invention is to provide a vehicle lamp that includes a lamp body provided with a cylindrical boss and that can reduce the weight and improve the rigidity.

The addition of the rib to each vehicle body attachment portion (bracket) increases the rigidity of the bracket, but also increases the weight of the lamp body, both of which are contrary to the demand for weight reduction. Simply thinning the bracket promotes weight reduction, but is not desirable in terms of reducing the strength of the bracket.

On the other hand, the coupling portion between the bracket base end portion and the lamp body is to be coupled via a curved portion as large as possible instead of a bent portion in order to avoid stress concentration. However, if the curved portion is made too large when the bracket attachment portion on the lamp body side is thick, since the strength of the coupling portion is reduced due to poor thermal resistance caused by an increase in cross-sectional area, there is a problem that the curved portion cannot be made large and it is difficult to avoid stress concentration.

The present invention has been made in view of the above problems, and an object of the present invention is to provide a vehicle lamp in which weight reduction and improvement in rigidity are achieved by providing a bracket, which is less likely to cause stress concentration at a coupling portion between a lamp body and the bracket and has sufficient strength even if the bracket is thin and lightweight, on the lamp body.

In view of the above problems, an object of the present invention is to provide a vehicle lamp that includes a lamp body formed with a vent hole and that can reduce the weight and improve the rigidity.

### SOLUTION TO PROBLEM

In order to achieve one of the above objects, a vehicle lamp according to one aspect of the present disclosure including: a container-shaped lamp body formed with a front opening; and a front cover that is assembled to the front opening of the lamp body and that defines a lamp chamber inside, in which a tubular body protrudes from a constituent surface constituting the lamp body, and in which the constituent surface protrudes from at least a partial region of an outer peripheral side surface of the tubular body and extends to be curved to a base end side or a distal end side of the tubular body.

With the above configuration, since the curved constituent surface serves as a reinforcing rib of the tubular body, it is not necessary to provide a rib for ensuring the rigidity of the constituent surface and the tubular body. Therefore, weight reduction and improvement in rigidity can be achieved.

In order to achieve one of the above objects, a vehicle lamp according to one aspect of the present disclosure including: a lamp body having a front opening; a front lens that is attached to the front opening of the lamp body and that forms a lamp chamber inside the lamp body; and a bracket provided on the lamp body as an attachment portion to a vehicle body, in which the bracket includes a main body portion coupled to the lamp body and an attachment portion engaged with the vehicle body, and in which a base end portion of the main body portion is formed as a Y-shaped base end portion having a Y-shaped vertical cross section, and is integrally formed with a curved surface portion of the lamp body.

According to the above configuration, in the base end portion of the bracket main body portion having the Y-shaped vertical cross section, a large curved portion can be formed between the base end portion and the coupling portion with the lamp body by thinning the attachment portion on the lamp body side. Therefore, stress concentration can be alleviated. The bracket has high rigidity by having a curved shape following the lamp body.

In order to achieve one of the above objects, a vehicle lamp according to one aspect of the present disclosure including: a lamp body having a front end opening; a front cover that is attached to the front end opening of the lamp body and that forms a lamp chamber inside the lamp body; and a bracket provided on the lamp body as an attachment portion to a vehicle body, in which the bracket includes a main body portion coupled to the lamp body and an attachment portion engaged with the vehicle body, in which the main body portion includes a semi-cylindrical portion that has a semi-cylindrical shape in cross section and that includes a curved portion in at least a part of the semi-cylindrical portion, and in which a base end portion of the semi-cylindrical portion is integrally formed on a curved surface of the lamp body.

As described above, the main body portion of the bracket, which is a portion integrated with the lamp body, is implemented by the semi-cylindrical portion, so that the bracket has a larger second moment of area as compared with the main body portion formed in a flat plate shape, and has high rigidity against bending.

In order to achieve one of the above objects, a vehicle lamp according to one aspect of the present disclosure including: a lamp body having a container shape with an open front surface; and a front cover that is assembled to a front opening of the lamp body and that defines a lamp chamber inside, in which a back wall of the lamp body is formed with a vent hole forming an air passage for communicating an inside and an outside of the lamp chamber, and a cylindrical wall extending rearward of the lamp body so as to surround the vent hole, in which the back wall is formed with a waterproof wall that surrounds the cylindrical wall while being separated from the cylindrical wall and that extends rearward of the lamp body, and in which at least a part of the waterproof wall has a curved surface protruding from a side surface in a middle of extension to a back surface, and the curved surface extends so as to be folded back to a base end portion side of the waterproof wall to constitute a part of the back wall.

With the above configuration, the back wall around the vent hole can be formed of a curved surface. When the lamp body is formed of a curved surface rather than a flat surface, the bending moment can be improved and the rigidity can be increased, so that the lamp body can be thinned. Further, with the above configuration, it is possible to increase the rigidity of at least the back wall around the vent hole, and even if the wall thickness of the back wall around the vent hole is small, it is possible to ensure the same degree of rigidity as in the related art.

### ADVANTAGEOUS EFFECTS OF INVENTION

According to the present invention, a lamp body provided with a cylindrical boss is provided, and weight reduction and improvement in rigidity can be achieved.

According to the present invention, the main body portion of the bracket has a Y-shaped vertical cross section. Accordingly, the attachment portion of the bracket base end portion on the lamp body side can be thinned, and the lamp body base end portion and the coupling portion on the lamp body side can be integrally formed in a state in which a large curved portion is formed, so that stress concentration on the coupling portion is reduced, and high rigidity against bending can be attained without providing a reinforcing rib on the bracket. Therefore, weight reduction of the lamp body and the vehicle lamp can be achieved by weight reduction and rigidity improvement of the bracket.

According to the present invention, the main body portion of the bracket is implemented by the semi-cylindrical portion, so that the main body portion has high rigidity against the bending stress. Therefore, high rigidity against bending can be attained even when the main body portion is thinned, and sufficient rigidity against bending can be attained in the bracket without providing a reinforcing rib. Therefore, further weight reduction of the vehicle lamp can be achieved via the lamp body.

According to the present invention, the lamp body formed with a vent hole is provided, and weight reduction and improvement in rigidity can be achieved.

### BRIEF DESCRIPTION OF DRAWINGS

[FIG. 1] FIG. 1 is a front view showing the schematic configuration of a vehicle lamp according to a first embodiment of the present disclosure.
[FIG. 2A] FIG. 2A is a front view of an attachment portion provided in a lamp body of a portion F shown in FIG. 1.
[FIG. 2B] FIG. 2B is a front perspective view of the attachment portion provided in the lamp body of the portion F shown in FIG. 1.
[FIG. 3A] FIG. 3A is a rear view of the attachment portion provided in the lamp body of the portion F shown in FIG. 1.
[FIG. 3B] FIG. 3B is a rear perspective view of the attachment portion provided in the lamp body of the portion F shown in FIG. 1.
[FIG. 4A] FIG. 4A is a front view of the attachment portion provided in the lamp body of the portion F shown in FIG. 1.
[FIG. 4B] FIG. 4B is a horizontal end view taken along a line G-G in FIG. 4A.
[FIG. 4C] FIG. 4C is a vertical end view taken along a line H-H in FIG. 4A.
[FIG. 5A] FIG. 5A is a front view of the attachment portion provided in the lamp body of the portion F shown in FIG. 1.
[FIG. 5B] FIG. 5B is an exploded view of the outer peripheral side surface of a boss shown in FIG. 4A.
[FIG. 5C] FIG. 5C is a horizontal end view taken along a line J-J in FIG. 5A.
[FIG. 6A] FIG. 6A is a front view showing a modification of the attachment portion shown in FIG. 1.
[FIG. 6B] FIG. 6B is a rear perspective view of the attachment portion shown in FIG. 6A.
[FIG. 6C] FIG. 6C is a side perspective view of the attachment portion shown in FIG. 6A.
[FIG. 7] FIG. 7 is a front view of a vehicle lamp according to a second embodiment and a third embodiment of the present disclosure.
[FIG. 8A] FIG. 8A is a front view of a bracket of the vehicle lamp according to the second embodiment.
[FIG. 8B] FIG. 8B is a rear view of the bracket of the vehicle lamp according to the second embodiment.
[FIG. 9A] FIG. 9A is a perspective view of the bracket according to the second embodiment as viewed obliquely from the front right and from above.
[FIG. 9B] FIG. 9B is a perspective view of the bracket according to the second embodiment as viewed obliquely from the front left and from below.
[FIG. 10A] FIG. 10A is a plan view of the bracket according to the second embodiment.
[FIG. 10B] FIG. 10B is an end view of the bracket shown in FIG. 10A cut perpendicularly at a position of a cutting line I-I.
[FIG. 10C] FIG. 10C is an end view when it is assumed that the bracket including a base end portion in the related art is cut perpendicularly at the same position as the cutting line I-I shown in FIG. 10A.
[FIG. 11A] FIG. 11A is an end view of the bracket shown in FIG. 10A cut perpendicularly at a position of a cutting line II-II.
[FIG. 11B] FIG. 11B is an end view of the bracket shown in FIG. 10A cut perpendicularly at a position of a cutting line III-III.
[FIG. 12] FIG. 12 is a perspective view of a bracket of the vehicle lamp according to the third embodiment as viewed obliquely from the front right.
[FIG. 13] FIG. 13 is a perspective view of the bracket shown in FIG. 12 as viewed obliquely from the rear right.
[FIG. 14A] FIG. 14A is a rear view of the bracket shown in FIG. 12.
[FIG. 14B] FIG. 14B is an end view of the main body portion of the bracket shown in FIG. 14A horizontally cut at a position of a cutting line I-I.
[FIG. 15A] FIG. 15A is a plan view of the bracket shown in FIG. 12.
[FIG. 15B] FIG. 15B is an end view of the main body portion of the bracket shown in FIG. 12 vertically cut at a position of a cutting line II-II.
[FIG. 15C] FIG. 15C is an end view of the main body portion of the bracket shown in FIG. 12 vertically cut at a position of a cutting line III-III.
[FIG. 16A] FIG. 16A is a perspective view showing a modification of the bracket shown in FIG. 12.
[FIG. 16B] FIG. 16B is an end view of a bracket main body portion shown in FIG. 16A cut horizontally.
[FIG. 17] FIG. 17 is a front view showing the schematic configuration of a vehicle lamp according to a fourth embodiment.
[FIG. 18] FIG. 18 is a front view of a lamp body shown in FIG. 17.
[FIG. 19] FIG. 19 is a perspective view of the lamp body shown in FIG. 18.
[FIG. 20A] FIG. 20A is an end view of the lamp body shown in FIG. 18 vertically cut at a position of a cutting line A-A.
[FIG. 20B] FIG. 20B is an end view of the lamp body shown in FIG. 18 vertically cut at a position of a cutting line B-B.
[FIG. 20C] FIG. 20C is an end view of the lamp body shown in FIG. 18 vertically cut at a position of a cutting line C-C.
[FIG. 20D] FIG. 20D is an end view of the lamp body shown in FIG. 18 vertically cut at a position of a cutting line D-D.
[FIG. 20E] FIG. 20E is an end view of the lamp body shown in FIG. 18 vertically cut at a position of a cutting line E-E.
[FIG. 21] FIG. 21 is an explanatory view showing a truss structure using beams in the vehicle lamp shown in FIG. 18.
[FIG. 22A] FIG. 22A is a vertical end view of a lamp body having a configuration in the related art for comparison.
[FIG. 22B] FIG. 22B is a vertical end view of the lamp body shown in FIG. 18.
[FIG. 23A] FIG. 23A is a rear view of the portion F in FIG. 18.
[FIG. 23B] FIG. 23B is a horizontal end view taken along a line G-G in FIG. 23A.
[FIG. 23C] FIG. 23C is a vertical end view taken along a line H-H in FIG. 23A.
[FIG. 23D] FIG. 23D is a plan view of the portion F in FIG. 18.
[FIG. 24] FIG. 24 is a rear perspective view of the portion F in FIG. 18.
[FIG. 25A] FIG. 25A is a vertical end view of a lamp body for comparison.
[FIG. 25B] FIG. 25B is a vertical end view of the lamp body corresponding to FIG. 23C.

### DESCRIPTION OF EMBODIMENTS

Hereinafter, a specific embodiment of the present invention will be described with reference to the drawings. In the drawings, the directions of the vehicle lamp are described as (front: rear: left: right: upper: lower). The embodiment is exemplary only without limiting the invention, and all or combinations of the features described in the embodiment are not necessarily essential to the invention. In the following description of the embodiment and the modification, the same configurations are denoted by the same reference signs, and the overlapping description thereof will be appropriately omitted.

### [First Embodiment]

### (Vehicle Lamp)

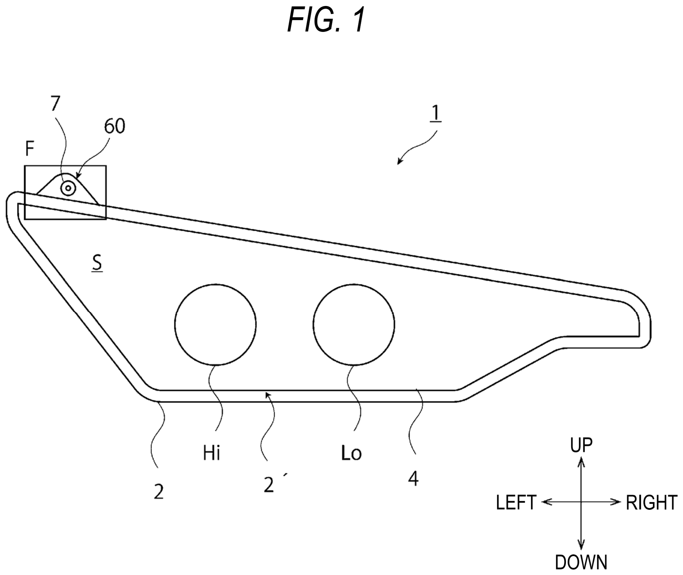

FIG. 1 is a front view of a vehicle lamp 1 according to a first embodiment of the present invention. The vehicle lamp 1 is a headlamp that is mounted on the left and right corner portions of the front of a vehicle.

As shown in FIG. 1, the vehicle lamp 1 includes a container-shaped lamp body 2 having a front opening 2', and a front cover 4 that is attached to the front opening 2' of the lamp body 2. The front cover 4 is made of a translucent resin such as polycarbonate or glass, and the front cover 4 is attached to the front opening 2' of the lamp body 2 to define the lamp chamber S inside.

A high beam lamp unit Hi and a low beam lamp unit Lo are accommodated in the defined lamp chamber S.

The high beam lamp unit Hi and the low beam lamp unit Lo are optical units that irradiate the front of the vehicle with light emitted from a light source to form a high beam light distribution or a low beam light distribution. The lamp units (Hi and Lo) have a known configuration in the related art, such as a reflective type or a projector type lamp unit, and the type thereof does not matter.

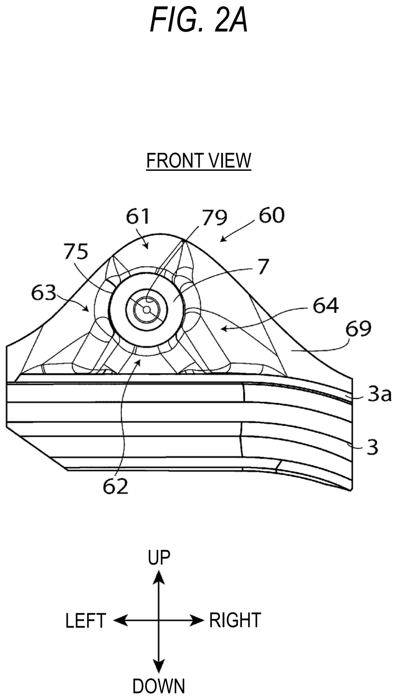

The lamp body 2 is molded by injection molding using a hard and rigid resin material. A seal groove 3 (see FIG. 2A to be described later) for engaging with a seal leg provided on the periphery of the front cover 4 is provided around the periphery of the front opening 2' of the lamp body 2.

An attachment portion 60 is provided on the outer surface of the peripheral edge of the front opening 2' of the lamp body 2 so as to protrude outward.

The attachment portion 60 is provided with a cylindrical boss 7 protruding forward. The front cover 4 is provided with an attached portion including a thin-walled portion or an opening corresponding to the hole position of the boss 7, and the front cover 4 is attached to the lamp body 2. The front cover 4 is fastened to the lamp body 2 by screwing a tapping screw into the inner hole of the boss 7 from the front. The boss 7 is used for assisting attachment of the front cover 4 after the front cover 4 is welded to the lamp body 2 or for reattachment when the front cover 4 is once removed from the lamp body 2.

In the first embodiment, the front cover 4 is fixed to the boss 7 using a tapping screw, but the present invention is not limited thereto, and an insert nut may be fitted into the boss 7 which is a tubular body, and the front cover 4 may be fastened with a bolt. The attachment portion 60 provided with the boss 7 is shielded by the vehicle body in a state in which the vehicle lamp 1 is attached to the vehicle body, and is not visually recognized from the outside.

### (Attachment Portion)

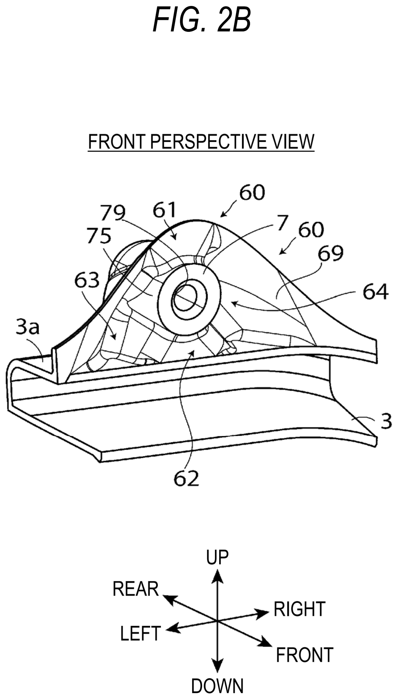

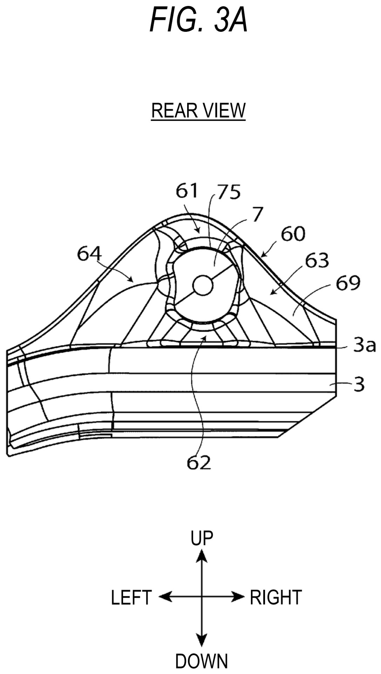

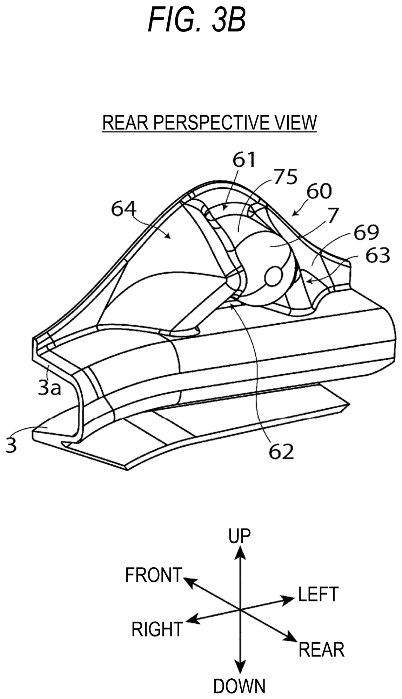

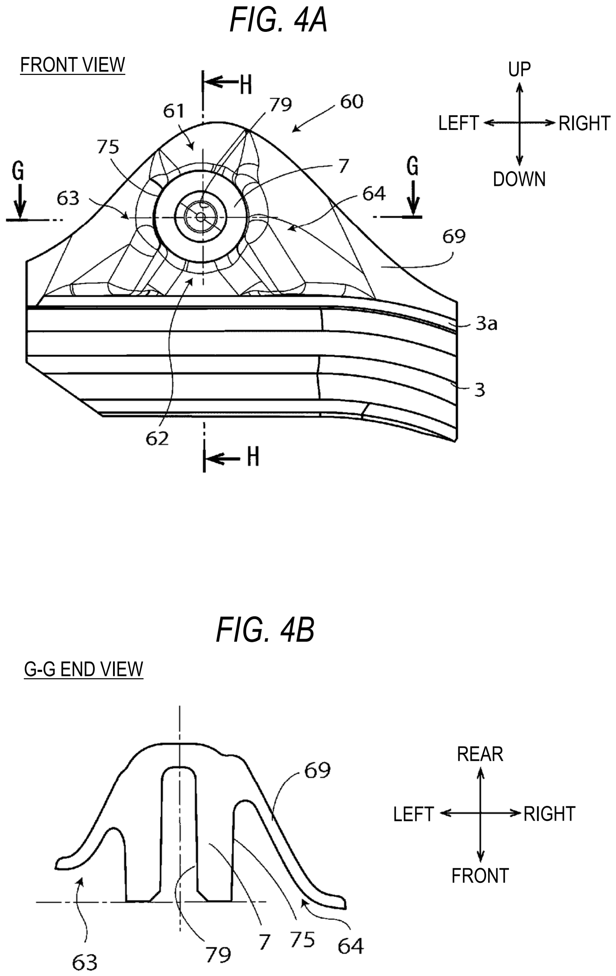

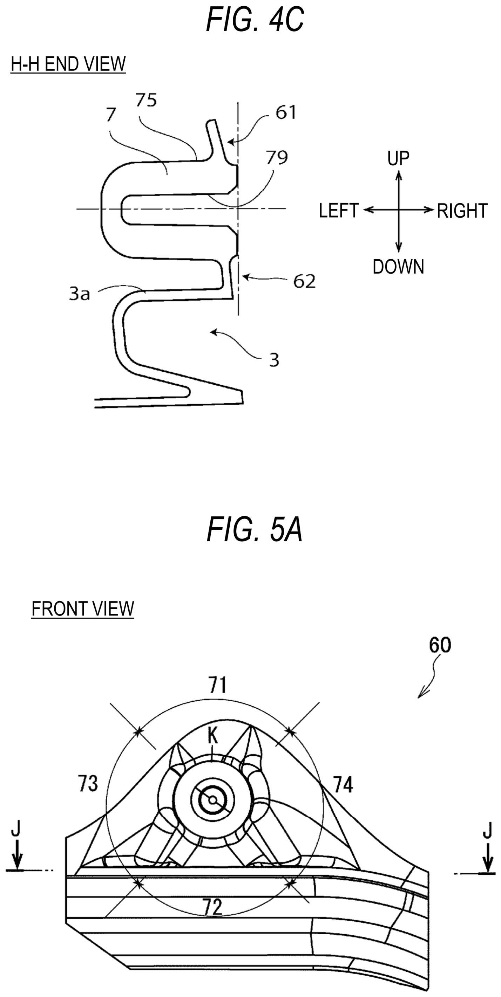

The attachment portion 60 will be described in detail. FIGS. 2A to 4C each show the attachment portion 60 provided in the lamp body 2 of a portion F shown in FIG. 1. FIG. 2A is a front view of the attachment portion 60. FIG. 2B is a front perspective view of the attachment portion 60. FIG. 3A is a rear view of the attachment portion 60. FIG. 3B is a rear perspective view of the attachment portion 60. FIG. 4A is a front view of the attachment portion 60. FIG. 4B is a horizontal end view taken along a line G-G in FIG. 4A. FIG. 4C is a vertical end view taken along a line H-H in FIG. 4A.

The attachment portion 60 protrudes outward from the seal groove 3 formed around the front opening of the lamp body 2. As an example, the attachment portion 60 shown in FIGS. 2A to 4C is provided on the upper side of the lamp body 2 and protrudes upward from an outer peripheral wall 3a of the substantially horizontal seal groove 3.

The attachment portion 60 includes an attachment surface 69 and the boss 7 provided on the attachment surface 69.

The attachment surface 69 has a substantially constant plate thickness, is mainly formed of a curved surface, and has a substantially triangular outer shape in the front view. The boss 7 protrudes at substantially the center of the attachment surface 69 having a triangular shape in the front view such that the opening of an inner hole 79 faces forward. The outer shape of the attachment portion 60 is not limited to a substantially triangular shape, and may be a rectangular shape, a semicircular shape, or the like. The boss 7 protrudes at least substantially at the center of the wall surface, which is the attached portion of the attachment surface 69, in the extending direction. For example, in the first embodiment, the boss 7 protrudes substantially at the center of the wall surface, which is the attached portion of the attachment surface 69, in the left-right direction in which the seal groove 3 extends.

The boss 7 protrudes from the front surface of the attachment surface 69. At least a part of the attachment surface 69 is connected to an outer peripheral side surface 75 of the boss 7, and the attachment surface 69 and the boss 7 are integrally formed.

The attachment surface 69 is divided into a plurality of regions as regions around the boss 7 with the boss 7 at the center, and each region is formed with a recess and a protrusion alternately. The recess and the protrusion are recessed or bulged toward the inner side in the circumferential direction where the boss 7 is located.

In the first embodiment, the attachment surface 69 is divided into four regions of an upper region 61, a lower region 62, a left region 63, and a right region 64, with the boss 7 at the center, the left region 63 and the right region 64 are formed in a concave shape recessed rearward in the front view, and the upper region 61 and the lower region 62 are formed in a convex shape bulging relatively forward. Since the plate thickness of the attachment surface 69 is kept substantially constant, in the rear view, the left region 63 and the right region 64 are formed in a convex shape, and the upper region 61 and the lower region 62 are formed in a relatively concave shape.

The edge portions of the regions adjacent to each other in the attachment surface 69 are gently curved and smoothly continuous without a bent portion or a step. The attachment surface 69 is curved many times in the extending direction (the front-rear direction) of the boss 7 with the boss 7 at the center, is connected to the outer peripheral side surface 75 of the boss 7 provided at the center, and is integrated with the boss 7.

In other words, the region of the outer peripheral side surface of the boss 7 is divided into substantially four regions, and in the front view, the upper region is a boss upper region 71, the lower region is a boss lower region 72, the left region is a boss left region 73, and the right region is a boss right region 74. In this case, the attachment surface 69 protrudes outward in the circumferential direction from the vicinity of the distal end opening of the boss 7 in each of the boss upper region 71 and the boss lower region 72, and gently extends toward the base end portion side of the boss 7 and outward in the circumferential direction. Similarly, the attachment surface 69 protrudes outward in the circumferential direction from the base end portion side of each of the boss left region 73 and the boss right region 74, and extends toward the distal end side of the boss 7 and outward in the circumferential direction.

Accordingly, the boss 7 is recessed from the attachment surface 69 in the upper and lower regions, and protrudes in the left and right regions. Therefore, as shown in FIG. 4B, in the horizontal cross-sectional view, the boss 7 appears to protrude from the attachment surface 69, and as shown in FIG. 4C, in the vertical cross-sectional view, the boss 7 appears to be recessed from the attachment surface 69.

In the attachment portion 60, the attachment surface 69 protruding from the outer peripheral side surface of the boss 7 is curved many times with the boss 7 as the center, and is connected to and integrated with the boss 7.

### (Advantageous Effects)

With the above configuration, the attachment surface 69 is connected to the outer peripheral side surface 75 of the boss 7 in a corrugated shape in the circumferential direction. This will be described in detail.

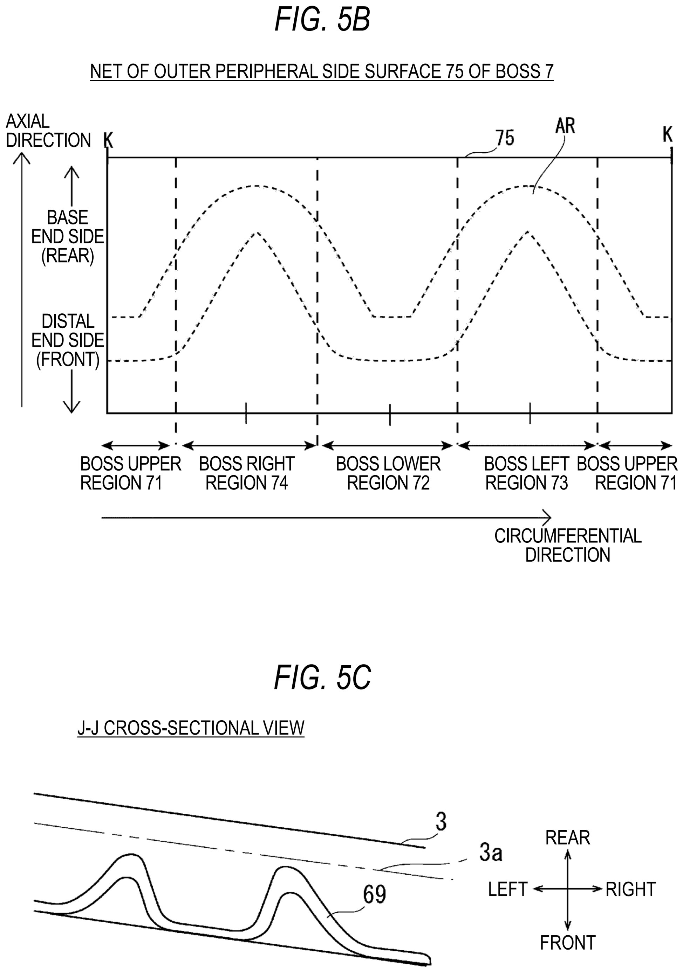

FIGS. 5A to 5C are explanatory diagrams showing the effects of the above configuration. FIG. 5A is a front view of the attachment portion 60 provided in the lamp body of the portion F shown in FIG. 1. FIG. 5B is a schematic exploded view of the outer peripheral side surface 75 of the boss 7 which is a tubular body shown in FIG. 4A. The dotted line in FIG. 5B indicates a connection portion between the edge portion of adjacent regions on the outer peripheral side surface of the boss 7 and the attachment surface 69. FIG. 5B shows a connection region (hereinafter, referred to as a connection region AR) in which the attachment surface 69 is connected to the outer peripheral side surface. FIG. 5C is a cross-sectional view taken along a line J-J shown in FIG. 5A.

As shown in FIG. 5B, with the above configuration, the attachment surface 69 is connected to the outer peripheral side surface of the boss 7 in a wavy shape along the circumferential direction. In other words, the attachment surface 69 protrudes from the connection region AR, and the attachment surface 69 extends so as to be curved toward the substrate side or the distal end side of the boss 7 at each location in the connection region AR.

The boss 7 is embedded in the center of the attachment surface 69 that is curved many times in the circumferential direction. Accordingly, the bonding area between the attachment surface 69 and the boss 7 is increased, and the attachment surface 69 and the boss 7 are connected in both the circumferential direction and the axial direction. Therefore, the attachment surface 69 itself functions as a reinforcing rib for the boss 7 and the attachment surface 69, and the attachment surface 69 and the boss 7 are firmly integrated to increase the rigidity of the attachment portion 60. In the related art, when the boss protrudes, it is necessary to provide a reinforcing rib on the landing portion (the base end portion) of the boss in order to improve the rigidity. On the other hand, in the first embodiment, since the curved attachment surface 69 itself serves as a reinforcing rib of the boss 7, it is not necessary to provide a rib for ensuring the rigidity of the attachment surface 69 and the boss 7. The boss 7 protrudes from the attachment surface 69 without providing a rib while ensuring a required length and required rigidity.

Since the attachment surface 69 is formed of a curved surface, the second moment of area of the attachment surface 69 increases, and the bending rigidity of the attachment portion 60 can be increased. By the improved rigidity, the attachment surface 69 can be thinned. Since the thickness is reduced by removing the rib and improving the rigidity, the weight can be reduced.

In the first embodiment, the connection region AR is formed around the outer peripheral side surface 75. Alternatively, the attachment surface 69 may protrude from at least a part of the outer peripheral side surface and may be curved and extended toward the substrate side or the distal end side of the boss 7.

The line J-J shown in FIG. 5A is a boundary line between the seal groove 3 and the attachment portion 60. FIG. 5C is a cross-sectional view taken along the line J-J in FIG. 5A, and shows the landing shape of the attachment surface 69 on the seal groove 3.

As shown in FIG. 5C, with the above configuration, the landing surface of the attachment surface 69 on the seal groove 3 is corrugated, and the attachment surface 69 meanders with respect to the outer peripheral wall 3a of the seal groove 3 extending in a band shape and is connected to the seal groove 3. In the related art, when the flat plate-shaped attachment portion protrudes from the wall surface of the seal groove or the like, the landing surface becomes linear and the bending rigidity becomes fairly low, and thus it is necessary to provide a reinforcing rib on the landing portion (the base end portion). On the other hand, in the first embodiment, the landing surface shape of the attachment surface 69 formed of a curved surface on the seal groove 3 is a corrugated shape, the landing area of the attachment surface 69 on the seal groove 3 increases, and the attachment surface 69 also lands in the front-rear direction. The attachment surface 69 is also bonded mainly in the left-right direction, which is the extending direction of the seal groove 3, and also in the orthogonal direction (the front-rear direction) of the seal groove 3 in which a load is applied when the fastening component is fastened to the boss 7, and the attachment surface 69 itself also serves as a reinforcing rib for the attachment surface 69 and the seal groove 3. With the above configuration of the attachment surface 69, the rigidity of the attachment portion 60 is increased, it is not necessary to provide a rib on the base end portion of the attachment surface 69, and the attachment surface 69 can be thinned.

Further, the seal groove 3 to which the attachment surface 69 is attached is formed thick because the seal groove 3 engages with the seal leg of the front cover 4, and has high rigidity. Therefore, the rigidity of the attachment portion 60 is further increased by bonding and integrating the attachment surface 69 with the thick seal groove 3 having high rigidity.

With reference to the boss 7, the attachment surface 69 protrudes from at least a partial region of the outer peripheral side surface 75 of the boss 7, extends outward in the circumferential direction, and curves and extends toward the base end side or the distal end side of the boss 7. At this time, the attachment surface 69 does not protrude from the most distal end portion (the front end surface of the tubular body) of the boss 7 having the opening of the inner hole 79, but protrudes from a position slightly lowered from at least the most distal end portion toward the base end portion side. Since the most distal end portion of the boss 7 is a surface with which another component (the front cover 4 in the first embodiment) abuts and is closely connected, it is preferable that the attachment surface 69 is connected to the outer peripheral side surface 75 excluding the distal end region of the boss 7 in order to improve the accuracy of the connection portion and prevent interference with the other component.

In the first embodiment, the attachment surface 69 is connected to the entire outer peripheral side surface of the boss 7 in the circumferential direction, but the present invention is not limited thereto, and at least a part of the curved attachment surface 69 may be connected to the outer peripheral side surface of the boss 7. For example, the lower region 62 of the attachment surface 69 may be connected to the boss 7 alone while being curved forward. In this case, in the front view, only the lower region 62 of the boss 7 is formed as a protrusion, and the left region 63 and the right region 64 are formed as relative recesses.

The attachment surface 69 is formed with a pair of a recess and a protrusion in each of the four regions in the front view, but the present invention is not limited thereto, and it is sufficient that a recess or a protrusion is formed in at least one region. In the adjacent regions, a protrusion or a recess is relatively formed.

In the attachment surface 69, the number of regions constituting the recess or the protrusion may be one or more. In this case, the regions constituting the recess or the protrusion are preferably formed at a plurality of positions separated from the central axis of the boss 7 in the circumferential direction. It is more preferable that the recesses are formed at two positions facing each other in the circumferential direction of the boss 7, and the protrusions are formed at other two positions facing each other. Since the sandwiching region is implemented as a relative recess or protrusion, the unevenness of the attachment surface 69, that is, the number of curves increases, and the rigidity of the attachment portion 60 can be increased to reduce the thickness of the attachment surface 69.

The attachment surface 69 connected to the boss 7 protrudes from the seal groove 3, but the present invention is not limited thereto, and the present configuration can also be applied to a boss directly provided on the wall surface of the lamp body 2, for example, a boss for fixing a lamp unit (Lo, Hi) provided on the back wall 6. In this case, the attachment surface 69 constitutes a part of the back wall 6 of the lamp body 2.

A partial region of the attachment surface 69 may be curved in any region and connected to the boss 7 to form a recess or a protrusion with respect to the boss 7. In a case where the attachment portion 60 protrudes from the wall surface of the lamp body 2 such as the seal groove 3, in the attachment surface 69, a recess or a protrusion of the attachment surface 69 is preferably formed in a region sandwiched between the wall surface and the boss, and the protrusion is more preferably formed in the sandwiched region. For example, in the first embodiment, the lower region 62 of the attachment surface 69 sandwiched between the seal groove 3 and the boss 7 is implemented as a protrusion in the front view. In this way, when the attachment surface 69 of the lower region 62 sandwiched between the seal groove 3 and the boss 7 is implemented as a protrusion, the attachment surface 69 of the lower region 62 extends to be curved rearward in the axial direction, that is, in a direction in which a load is applied at the time of attachment of another component while facing the adjacent boundary portion (the outer side in the circumferential direction). Therefore, the attachment surface 69 serves as a reinforcing rib for the boss 7 and a reinforcing rib for the seal groove 3. Accordingly, the rigidity of the attachment portion 60 is further improved. Since the boss 7 protrudes, if the sandwiching region is formed by a recess, the base end portion of the boss 7 is mainly supported on the attachment surface 69. In order to support the central portion of the boss mainly by the attachment surface 69 and firmly support the boss 7 in a well-balanced manner, it is more preferable that the attachment surface 69 in the sandwiching region forms a protrusion.

### (Modification)

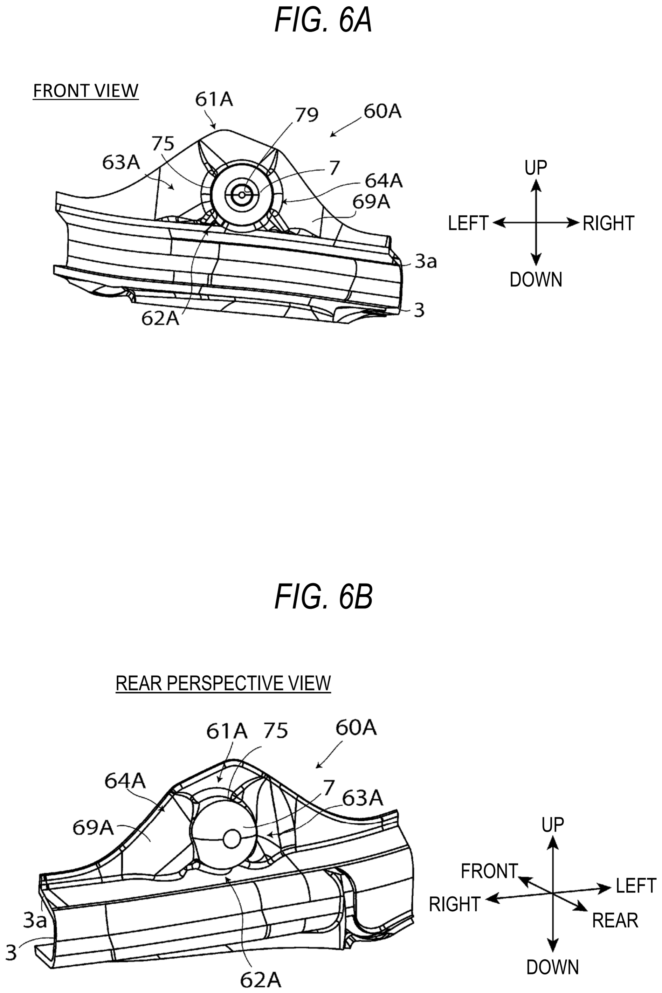

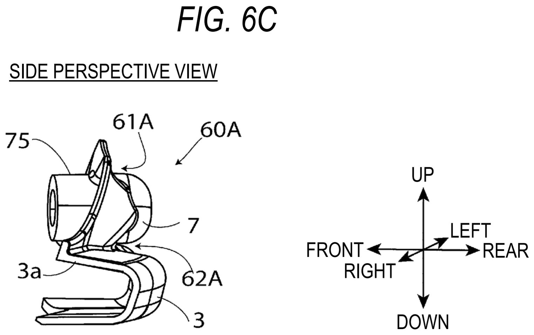

FIGS. 6A to 6C show an attachment portion 60A according to a modification. FIG. 6A is a front view of the attachment portion 60A. FIG. 6B is a rear perspective view of the attachment portion 60A. FIG. 6C is a side perspective view of the attachment portion 60A.

The attachment portion 60A includes an attachment surface 69A and the boss 7, and protrudes from the outer peripheral wall 3a of the seal groove 3. The boss 7 is provided at the center of the lower end portion of the attachment surface 69A having a substantially triangular shape in the front view. The outer peripheral wall 3a of the seal groove 3 is slightly inclined rearward, and the front lower end portion of the boss 7 provided horizontally is integrated with the seal groove 3.

The interval between the boss 7 and the seal groove 3 is fairly small, and a lower region 62A of the attachment surface 69A has a small area, is implemented as a protrusion in the front view, and is smoothly connected to a left region 63A and a right region 64A which are recesses. Therefore, the connection portion between the attachment surface 69A and the seal groove 3 is formed in a corrugated shape in the top view. With the above configuration, the boss 7 is firmly connected to the seal groove 3 and the attachment surface 69A without a rib.

Like the attachment portion 60A, the region (the lower region 62A in the first embodiment) sandwiched between the boss 7 and the wall surface (the seal groove 3 in the first embodiment) on which the attachment portion 60A is provided is preferably narrower than the other region. In other words, the clearance between the wall surface on which the attachment portion 60A protruding from the lamp body 2 is provided and the boss 7 is preferably small or zero. Accordingly, the boss 7 can be firmly supported on the attachment surface 69A and firmly connected to the wall surface, the rigidity of the attachment portion 60A can be increased, and the attachment surface 69A can be thinned.

### [Second Embodiment]

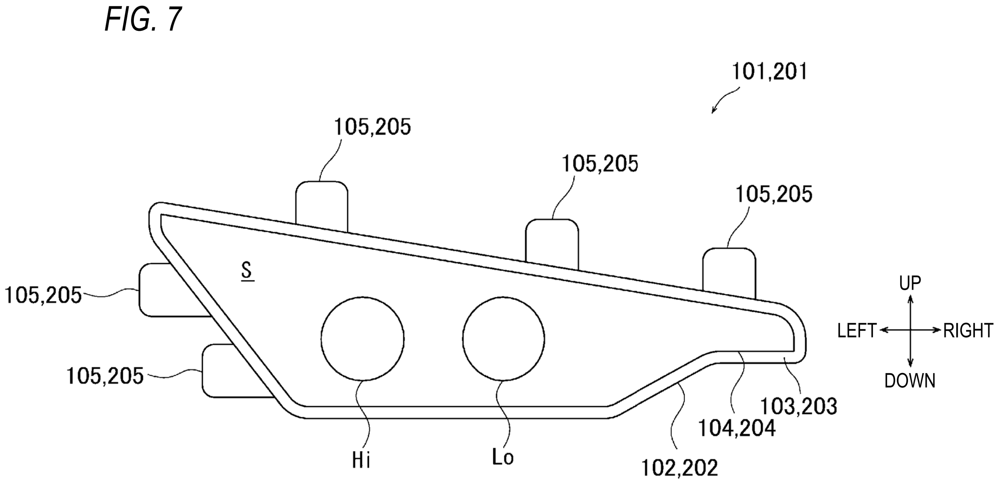

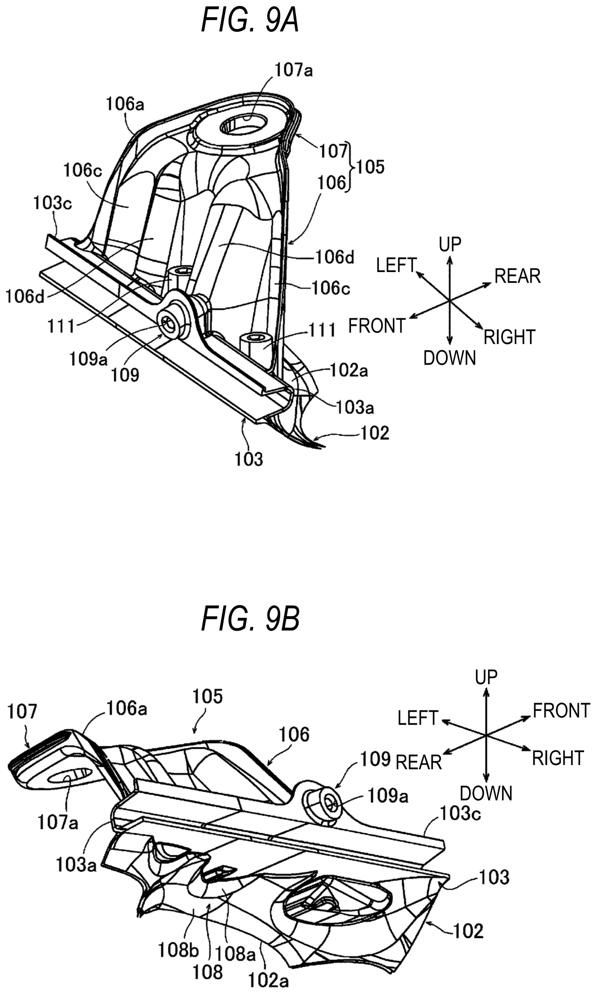

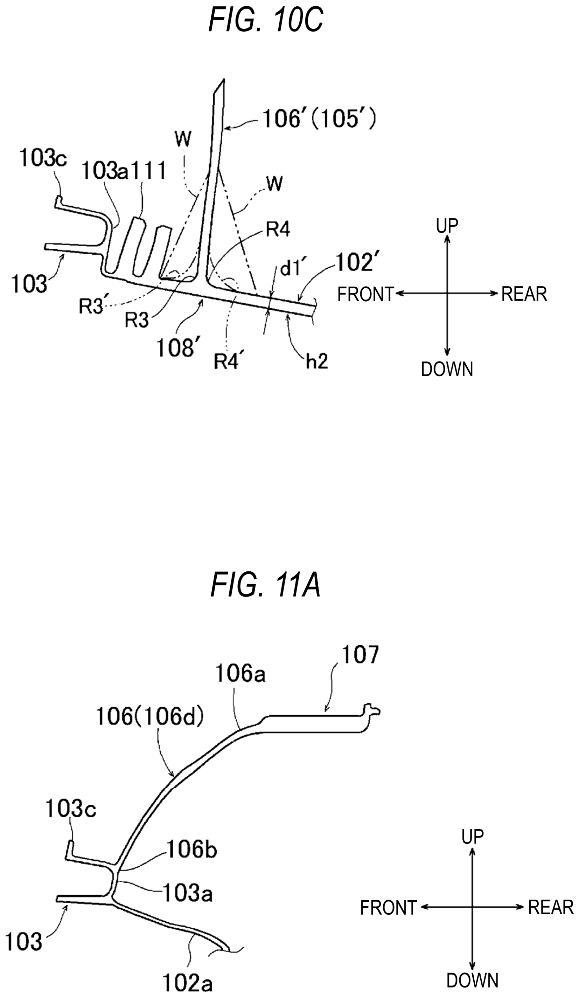

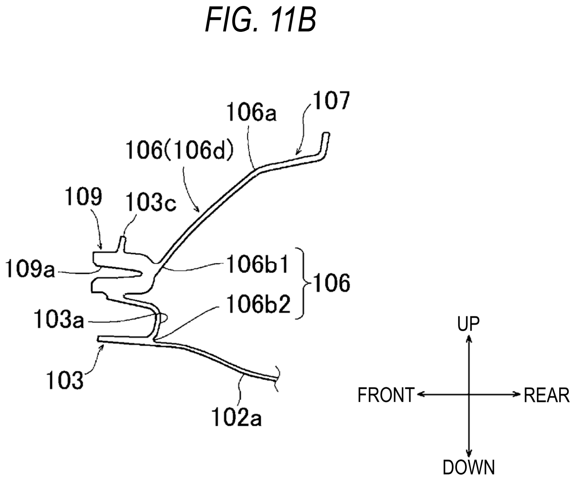

FIG. 7 is a front view of a vehicle lamp 101 according to a second embodiment of the present invention. The vehicle lamp 101 shown in FIG. 7 includes a lamp body 102 and a front lens 104. The lamp body 102 is made of resin or the like, has a container shape in a vertical cross section along the front-rear direction, with a back wall extending in the upper-lower direction and a bottom wall extending in the front-rear direction, and has an opening at the front end thereof. As shown in FIGS. 9A, 9B, 11A, and 11B, a groove-shaped seal portion 103 recessed rearward is provided on the entire circumference of the front end opening of the lamp body 102. The front lens 104 is made of a light-transmitting material such as resin or glass, and is fixed to the seal portion 103.

The high beam lamp unit Hi and the low beam lamp unit Lo are accommodated in the defined lamp chamber S shown in FIG. 7, both of which emit headlight forward (toward the viewer on the page).

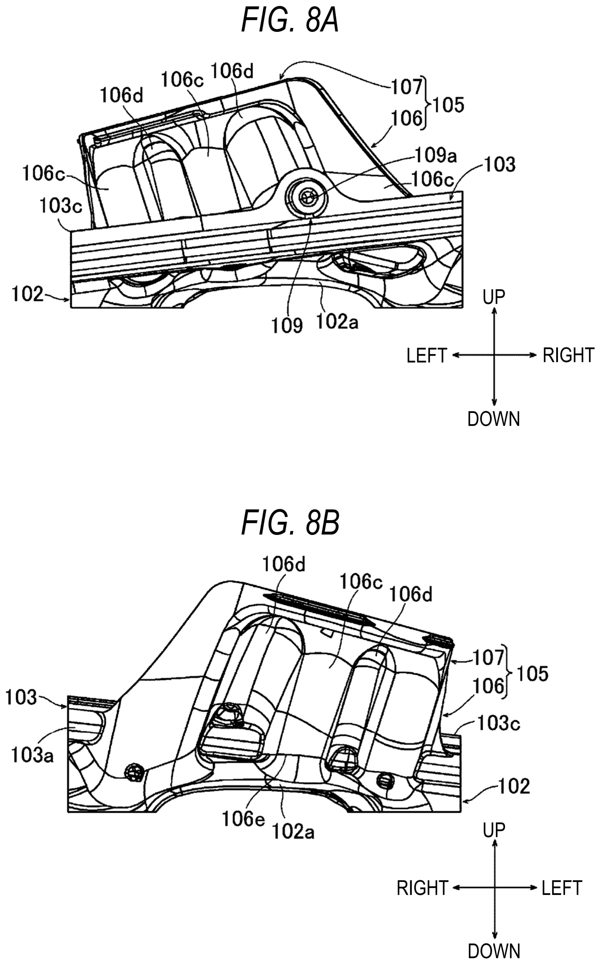

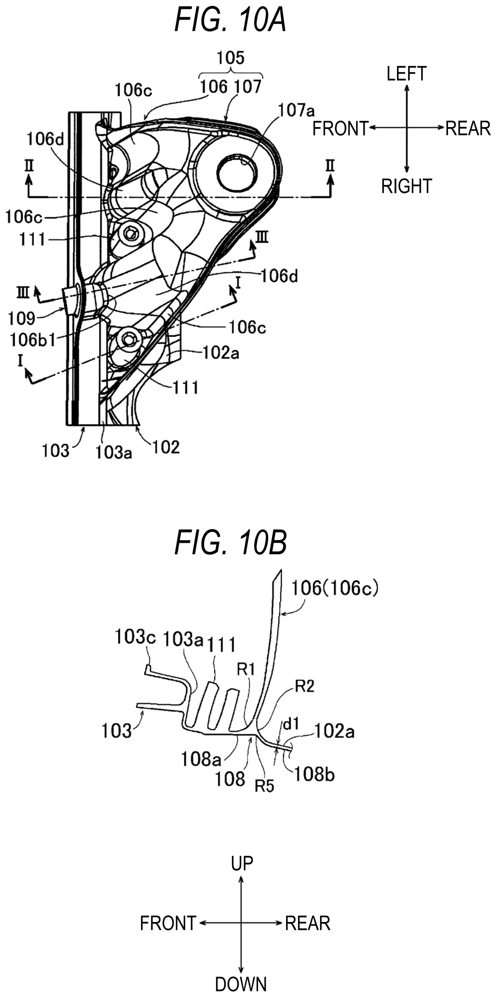

As shown in FIG. 7, a plurality of brackets 105 shown in FIGS. 8A to 10A are integrally formed at the upper end portion of the lamp body 102 behind the seal portion 103. In FIG. 7, the detailed form of the bracket 105 formed in the seal portion 103 is omitted. FIG. 8A is a front view of the bracket 105 as viewed from the front of the lamp body 102 in FIG. 7. FIG. 8B is a rear view of the bracket 105. FIG. 9A is a perspective view of the bracket 105 as viewed obliquely from the front right and from above. FIG. 9B is a perspective view of the bracket 105 when the lamp body 102 shown in FIG. 7 is viewed obliquely from the front left and from below. FIG. 10A is a plan view of the bracket 105.

As shown in FIGS. 8A, 9A, and 9B, a bottomed cylindrical boss portion 109 for screwing and fixing the front lens 104 protrudes forward and rearward on an upper end wall 103c of the groove-shaped seal portion 103. A protrusion (not shown) formed on the entire circumference along the seal portion 103 and an attachment portion (not shown) integrally molded with the protrusion at a position corresponding to the boss portion 109 outside the protrusion are provided on the outer peripheral edge portion of the front lens 104. The front lens 104 penetrates the attachment portion by a tapping screw (not shown) in a state in which the protrusion is engaged with an elastic member (not shown) for sealing provided inside the seal portion 103, and is screwed and fixed to a hole 109a of the boss portion 109. The front lens 104 defines the lamp chamber S sealed inside the lamp body 102 via the seal portion 103.

As shown in FIGS. 9A and 9B, the bracket 105 includes a main body portion 106 and an attachment portion 107. The main body portion 106 is integrally formed in a state of being coupled to the lamp body 102, and extends upward. The attachment portion 107 is integrated with the main body portion 106 in a state of being bent obliquely rearward and upward from a rear end 106a of the main body portion 106. The attachment portion 107 is engaged and fixed to the vehicle body (not shown) via an attachment hole 107a.

The main body portion 106 of the bracket 105 shown in FIGS. 8A, 8B, 9A, 9B, and 10A has a corrugated curved shape in which a concave curved portion 106c and a convex curved portion 106d are alternately continuous in the left-right direction. As shown in FIGS. 8B and 9A, the base end portion 106e, which is the lowermost portion of the main body portion 106, is integrally formed with a curved surface portion 102a of the lamp body 102.

FIG. 10B is an end view of the main body portion 106 in the bracket 105 of the lamp body 102 shown in FIG. 10A cut at a position of a cutting line I-I. FIG. 10C is an end view when it is assumed that a main body portion 106' of a bracket 105' of a lamp body 102' in the related art is cut at the position of the cutting line I-I described above. The bracket 105' has the same configuration as the bracket 105 except that the configuration of the main body portion 106' is replaced with that of the main body portion 106 according to the second embodiment.

As shown in FIG. 10C, the main body portion 106' in the bracket 105' in the related art includes a T-shaped base end portion 108' that protrudes upward from a flat surface portion h2 of the lamp body 102' in the vertical cross section and in which the T shape is formed upside down. The main body portion 106' has a problem of an increase in weight due to the addition of a rib W (the two-dot chain line portion) although the rigidity against bending is improved by providing the rib W.

As shown in FIG. 10C, in the T-shaped base end portion 108' in the related art, arc portions R3 and R4 are provided at the coupling portion between the main body portion 106' and the flat surface portion h2, thereby reducing stress concentration when the bending stress acts. From the viewpoint of reducing the stress concentration, it is desirable that the arc portions R3 and R4 have a curvature as small as possible and are formed gently. However, since the lamp body is generally made of a resin or the like, when a gentle and large arc portion having a small curvature such as arc portions R3' and R4' is formed, the strength of the T-shaped base end portion 108' may decrease due to difficulty in cooling heat caused by thickening. Therefore, in the T-shaped base end portion 108' in the related art, since it is necessary to form an arc portion having a large curvature as indicated by reference signs R3 and R4, there is also a problem that it is difficult to reduce stress concentration.

In view of the above problem, the main body portion 106 of the bracket 105 in the second embodiment shown in FIG. 10B includes a Y-shaped base end portion 108 that protrudes upward from the curved surface portion 102a of the lamp body 102 in the vertical cross section and that is in a form in which the Y shape is formed upside down. The Y-shaped base end portion 108 includes, on the lower surface, a gentle arc portion R5 having a concave shape, a front curved surface portion 108a, and a rear curved surface portion 108b. The Y-shaped base end portion 108 has a concave lower surface on the upper side, so that the thickness of the support portion of the main body portion 106 is reduced, and the rigidity against bending is improved by forming the concave lower surface into an arc shape and forming the flat plate portion into an arc portion.

As shown in FIGS. 10B and 10C, the main body portion 106 is formed of the front curved surface portion 108a and the rear curved surface portion 108b which are parts of the curved surface portion 102a of the lamp body 102. Accordingly, the Y-shaped base end portion 108 can form, at the root of the main body portion 106, gentle arc portions R1 and R2 having a curvature smaller than that of the arc portions R3 and R4 of the T-shaped base end portion 108' in the related art. Therefore, it is possible to reduce stress concentration at the coupling portion with the lamp body side as compared with the main body portion 106' in the related art.

As shown in FIG. 10B, it is desirable that the main body portion 106 is not formed in a linear shape like the main body portion 106' in the related art, but is formed in a gentle arc shape following the front arc portion R1 and the rear arc portion R2, that is, following the curve of the curved surface portion of the lamp body 102. The main body portion 106 includes the Y-shaped base end portion 108 including the arc portions R1, R2, and R5, so that the bending rigidity is improved by the combination of the arc shapes. Therefore, in the curved surface portion 102a which is the attachment portion of the main body portion 106, a wall thickness d1 of the curved surface portion 102a is made smaller than a wall thickness d1' of the flat surface portion h2 in the related art shown in FIG. 10C, and the rigidity equal to or higher than that in the related art can be achieved without providing the rib W in the related art. Therefore, the bracket 105 according to the second embodiment achieves weight reduction while improving the rigidity, and can contribute to weight reduction of the lamp body 102 and the vehicle lamp 101. The rigidity of the bracket 105 is further improved by forming the main body portion 106 in a curved shape following the arc portion R1 and the arc portion R2.

FIG. 11A is an end view of the bracket 105 of the lamp body 102 according to the second embodiment shown in FIG. 10A cut at a position of a cutting line II-II. FIG. 11B is an end view of the bracket 105 of the lamp body 102 according to the second embodiment shown in FIG. 10A cut at a position of a cutting line III-III.

As shown in FIG. 11A, in the second embodiment, it is desirable that a part of the front end portion 106b of the main body portion 106 (the convex curved portion 106d) of the plurality of brackets 105 is integrally formed so as to be continuous with the rear end portion 103a of the seal portion 103 of the lamp body 102, and the base end portion of the main body portion 106 is integrally formed with the curved surface portion 102a of the lamp body 102.

As shown in FIGS. 11A and 11B, when the main body portion 106 is formed integrally with the seal portion 103, the bending stress generated in the bracket 105 acts not only on the bracket 105 but also on the lamp body 102 via the seal portion 103. According to the vehicle lamp 101 in the second embodiment, the bending stress generated in the bracket 105 is also received by the seal portion 103 of the lamp body 102, so that the rigidity of the bracket can be achieved by both the lamp body 102 and the bracket 105. Therefore, the rigidity of the bracket 105 is further improved, and further weight reduction of the lamp body 102 and the vehicle lamp 101 can be achieved.

Further, as shown in FIG. 11B, in the second embodiment, it is desirable that a part of the front end portion 106b of the main body portion 106 (the convex curved portion 106d) of the plurality of brackets 105 is integrally formed so as to be continuous with the boss portion 109 for attachment integrally formed with the seal portion 103, and the base end portion of the main body portion 106 is integrally formed with the curved surface portion 102a of the lamp body 102. In FIG. 11B, an upper front end portion 106b1 of the main body portion 106 is integrally formed with the boss portion 109 for attaching the front lens 104, and a lower front end portion 106b2 of the main body portion 106 is integrally formed with the seal portion 103.

As shown in FIGS. 11A and 11B, when the main body portion 106 is integrally formed with the boss portion 109 for attaching the front lens 104, the bending stress generated in the bracket 105 acts not only on the lamp body via the bracket 105 and the seal portion 103 but also on the front lens 104 screwed and fixed to the boss portion 109 for attachment. According to the vehicle lamp 101 in the second embodiment, the bending stress generated in the bracket 105 is also received by the lamp body 102 and the front lens 104, so that the rigidity of the bracket 105 can be achieved by the bracket 105, the lamp body 102, and the front lens 104 as a whole. Therefore, the rigidity of the bracket 105 is further improved, and further weight reduction of the lamp body 102 and the vehicle lamp 101 can be achieved.

### [Third Embodiment]

Referring again to FIG. 7, a vehicle lamp 201 according to a third embodiment includes a lamp body 202 and a front cover 204. The lamp body 202 and the front cover 204 have the same configurations as the lamp body 102 and the front lens 104 according to the second embodiment, respectively, except for the configurations to be described later. The front cover 204 is engaged with the seal portion 203 from the front via a sealing elastic member (not shown), and defines the lamp chamber S sealed inside the lamp body 202.

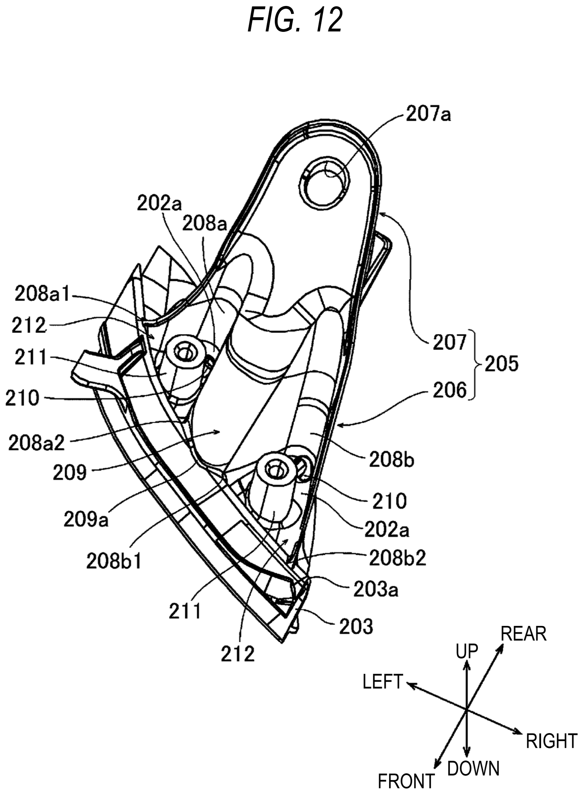

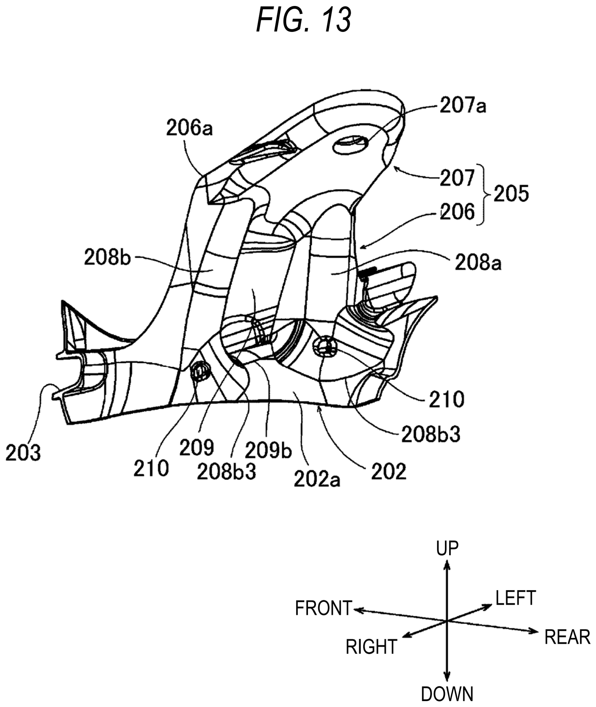

As shown in FIG. 7, a plurality of brackets 205 shown in FIGS. 12 to 15A are integrally formed at the upper end portion of the lamp body 202. Although the detailed form of the bracket 205 is omitted in FIG. 7, FIG. 12 is a perspective view of the bracket 205 according to the third embodiment as viewed obliquely from the front side of the lamp body 202. FIG. 13 is a perspective view of the bracket 205 shown in FIG. 12 as viewed obliquely from the rear right of the lamp body 202.

As shown in FIGS. 12 and 13, the bracket 205 includes a main body portion 206 and an attachment portion 207. The main body portion 206 and the attachment portion 207 have the same configurations as the main body portion 106 and the attachment portion 107 according to the second embodiment, respectively, except for the configurations to be described later.

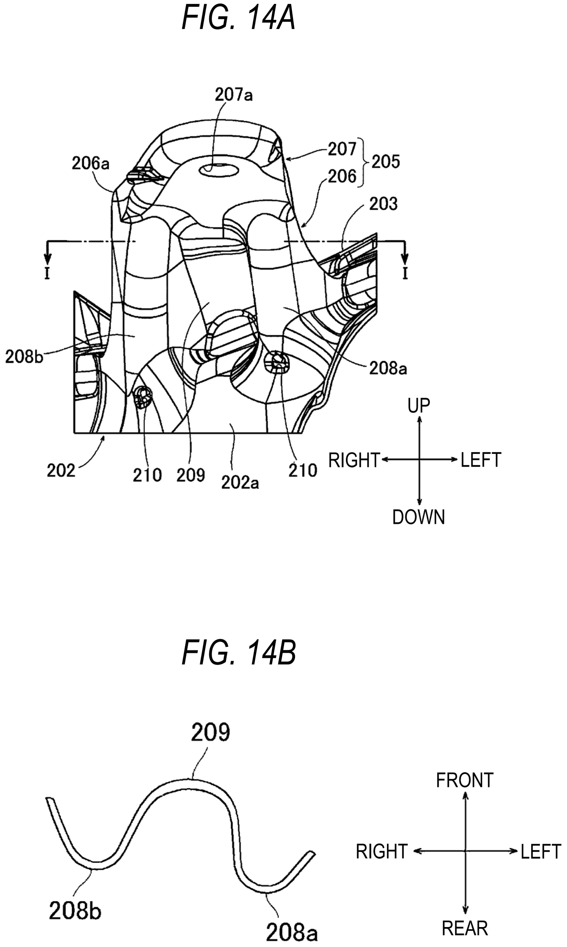

FIG. 14A is a rear view of the bracket 205 shown in FIG. 12. FIG. 14B is an end view of the main body portion 206 shown in FIG. 14A cut at a position of a cutting line I-I. The main body portion 206 shown in FIGS. 12, 13, and 14A includes a plurality of semi-cylindrical portions having a semi-cylindrical shape in cross section as shown in the end view of FIG. 14B. In the third embodiment, the main body portion 206 includes a convex semi-cylindrical portion 209 that is convex forward, and a pair of concave semi-cylindrical portions 208a and 208b that are integrally molded so as to be smoothly continuous to the left and right of the convex semi-cylindrical portion 209 and that are concave forward. The main body portion 206 is implemented as a continuous semi-cylindrical portion in which the concave semi-cylindrical portion 208a, the convex semi-cylindrical portion 209, and the concave semi-cylindrical portion 208b are alternately formed in this order, and accordingly is formed in a corrugated shape as shown in FIG. 14B.

As shown in FIG. 13, a base end portion 208a3, a base end portion 208b3, and a base end portion 209b, which are the lowermost portions of the concave semi-cylindrical portion 208a, the concave semi-cylindrical portion 208b, and the convex semi-cylindrical portion 209, respectively, are all integrally formed on a curved surface 202a of the lamp body 202.

In this way, the main body portion 206 of the bracket 205, which is a portion integrated with the lamp body 202, is implemented by one or more semi-cylindrical portions, so that the bracket 205 has a larger second moment of area as compared with the main body portion in the related art formed in a flat plate shape, and has high rigidity against bending. In the main body portion in the related art formed in a flat plate shape, it is necessary to provide a rib in order to improve the bending rigidity, or it is necessary to increase the plate thickness of the main body portion. On the other hand, the main body portion 206 according to the third embodiment is not provided with a rib and has a corrugated shape even if the plate thickness is small, and accordingly has sufficient rigidity against bending. Therefore, it is possible to contribute to weight reduction of the bracket 205 and the lamp body 202 required from the viewpoint of carbon neutral. The number of the plurality of semi-cylindrical portions forming the main body portion 206 is not limited to three as in the third embodiment, and may be two or four or more as long as the uneven semi-cylindrical portions are alternately repeated.

The base end portion 208a3, the base end portion 208b3, and the base end portion 209b of the main body portion 206 of the bracket 205 shown in FIG. 13 are integrated with the lamp body 202 on the curved surface 202a having a larger second moment of area than a flat surface. Therefore, the main body portion 206 has higher rigidity than that of being integrated with the flat surface of the lamp body 202.

As shown in FIGS. 12 and 13, front end portions 208a1 and 208a2 of the concave semi-cylindrical portion 208a and front end portions 208b1 and 208b2 of the concave semi-cylindrical portion 208b of the main body portion 206 are integrally formed with a rear end portion 203a of the seal portion 203. Since a front end portion 209a of the convex semi-cylindrical portion 209 also protrudes forward from the front end portions 208a2 and 208b1 of the concave semi-cylindrical portion, the front end portion 209a is integrally formed with the rear end portion 203a of the seal portion 203.

As shown in FIG. 7, in the lamp body 202, the front cover 204 is fixed to the seal portion 203. As shown in FIG. 12, when the concave semi-cylindrical portions 208a and 208b and the convex semi-cylindrical portion 209 of the main body portion 206 of the bracket 205 are integrally formed with the seal portion 203 of the lamp body 202, the bending stress generated in the bracket 205 acts not only on the bracket 205 but also on the lamp body 202 via the seal portion 203. According to the vehicle lamp 201 in the third embodiment, the bending stress generated in the bracket 205 is also received by the seal portion 203 of the lamp body 202, so that the rigidity of the bracket 205 can be achieved by both the seal portion 203 which is a part of the lamp body 202 and the main body portion 206 including the corrugated semi-cylindrical portion. Therefore, the weight of the bracket 205 is reduced by the thinning, the rigidity is further improved, and further weight reduction of the lamp body 202 and the vehicle lamp 201 can be achieved.

As shown in FIG. 12, in particular, a region formed by the concave semi-cylindrical portion 208a on the left side (208b on the right side), the seal portion 203, and the curved surface 202a of the lamp body 202 has higher rigidity than the other regions by defining box portions 212 and 212. Boss portions 211 and 211 for attachment to the vehicle body are provided on a part of the curved surface portion 102a of the lamp body 202, which is the bottom surfaces of the box portions 212 and 212.

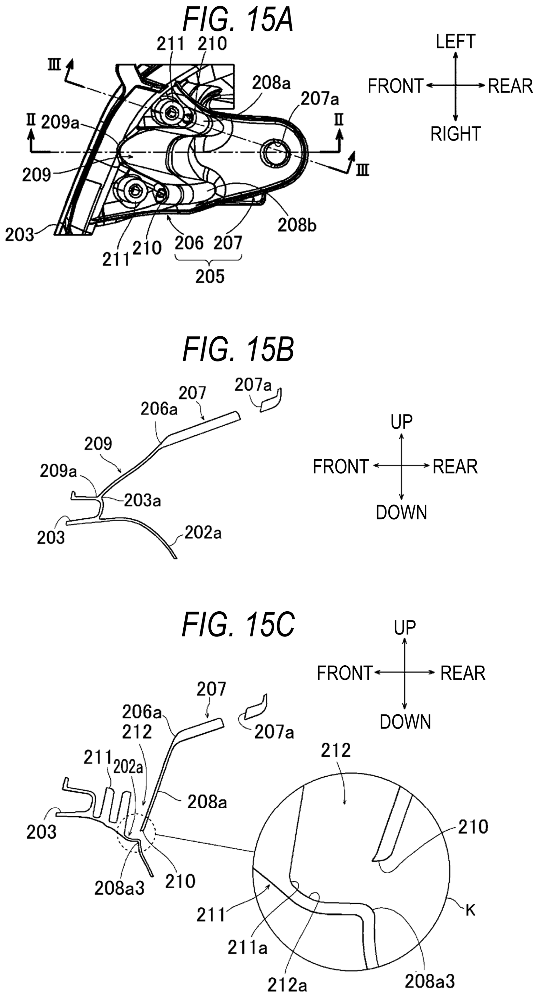

As shown in FIGS. 15A, 12, and 13, drain holes 210 and 210 penetrating from the inside to the outside of the box portions 212 and 212 are formed in the base end portion 208a3 of the concave semi-cylindrical portion 208a and the base end portion 208b3 of the concave semi-cylindrical portion 208b. The drain holes 210 and 210 penetrate from the box portions 212 and 212 to the outside of the lamp chamber S, and discharge water due to condensation or the like generated inside the box portions 212 and 212 to the outside of the lamp body 202, that is, the outside of the lamp chamber S.

Since the rigidity of the concave semi-cylindrical portions 208a and 208b shown in FIG. 5B is improved by forming the box portions 212 and 212, the rigidity is less likely to decrease even when the drain holes 210 and 210 are formed. Therefore, the bracket 205 can have sufficient rigidity even if the drain holes 210 and 210 are formed.

As shown in an enlarged portion (an enlarged portion of a part surrounded by a broken line) denoted by a reference sign K in FIG. 15C, the curved surface 202a of the bottom surfaces of the box portions 212 and 212 is provided with an inclined curved surface 212a that gradually descends from the vicinity of a lowest end portion 211a of the boss portion 211 to the base end portion 208a3 of the concave semi-cylindrical portion 208a and the base end portion 208b3 of the concave semi-cylindrical portion 208b. The inclined curved surface 212a is continuous with the drain holes 210 and 210 located at the lowermost portions of the box portions 212 and 212. As a result, water due to condensation or the like generated inside the box portions 212 and 212 is promoted to be discharged to the outside of the box portions 212 and 212 via the descending inclined curved surface 212a.

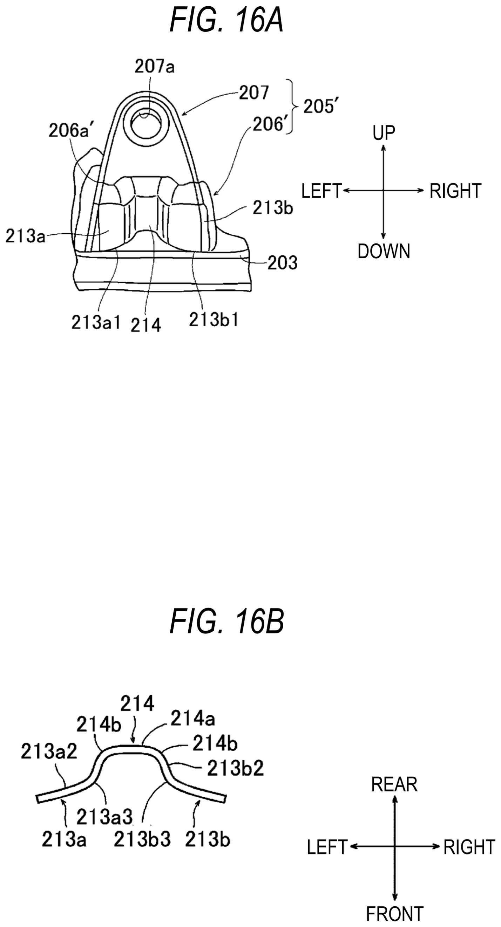

FIG. 16A is a view showing a bracket 205' which is a modification of the bracket 205 shown in FIGS. 7 and 12 to 15A. FIG. 16B is an end view of the bracket 205' cut in the horizontal direction. The bracket 205' has the same configuration as the bracket 205 shown in FIGS. 7 and 12 to 15A except for the configuration of a main body portion 206'. The attachment portion 207 of the bracket 205' is integrated with the main body portion 206' in a state of being bent obliquely rearward and upward from a distal end 206a' of the main body portion 206'.

The main body portion 206' shown in FIGS. 16A and 16B includes a continuous semi-cylindrical portion with repeated unevenness, including convex semi-cylindrical portions 213a and 213b that are convex forward and a concave semi-cylindrical portion 214 that is concave forward. As shown in FIG. 16B, the main body portion 206' has a crank-shaped transverse cross-sectional shape. The convex semi-cylindrical portions 213a and 213b include a pair of plate-shaped portions 213a2 and 213b2 and curved portions 213a3 and 213b3. The concave semi-cylindrical portion 214 includes a plate-shaped portion 214a, the plate-shaped portions 213a2 and 213b2, and a curved portion 214b. The main body portion 206' has a large second moment of area by having a crank shape partially having a curved portion, and has high rigidity. The front end portion 213a1 of the convex semi-cylindrical portion 213a and the front end portion 213b1 of the convex semi-cylindrical portion 213b are integrally formed with the seal portion 203, so that the main body portion 206' also has higher rigidity similarly to the main body portion 206.

### [Fourth Embodiment]

### (Vehicle Lamp 301)

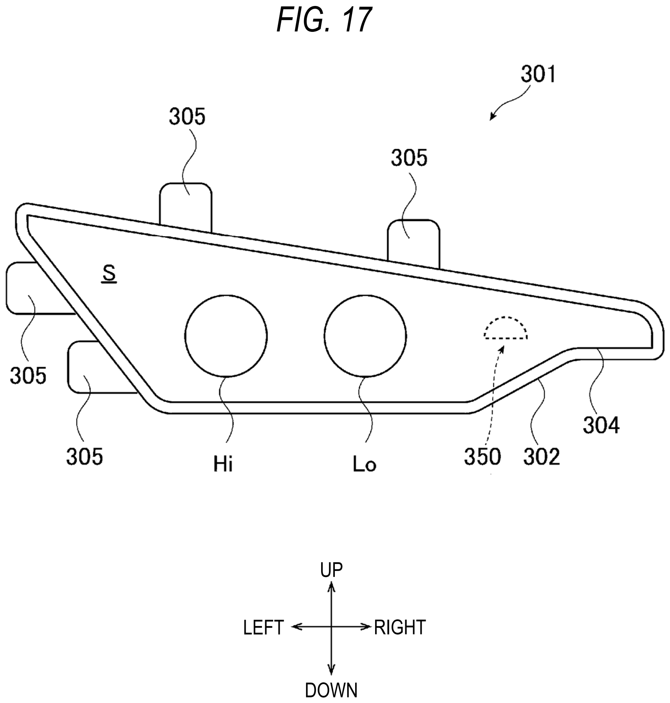

FIG. 17 is a front view of a vehicle lamp 301 according to a fourth embodiment of the present invention. The vehicle lamp 301 is a headlamp that is mounted on the left and right corner portions of the front of a vehicle.

As shown in FIG. 17, the vehicle lamp 301 includes a container-shaped lamp body 302 having an open front side, and a front cover 304 assembled to the front opening of the lamp body 302. The lamp body 302 and the front cover 304 have the same configurations as the lamp body 2 and the front cover 4 according to the first embodiment shown in FIG. 1, respectively, except for the contents to be described later.

In the lamp body 302, a vent hole 350 forming an air passage for communicating the inside and the outside of the lamp chamber S is formed. The vent hole 350 allows the air in the lamp chamber S to expand and contract due to heat generation due to lighting of the light sources of the lamp units (Hi, Lo) provided in the lamp chamber S and changes in temperature. Moisture in the lamp chamber S is released to the outside, and moisture accumulation in the lamp chamber S is prevented. Accordingly, fogging in the lamp chamber S caused by moisture in the lamp chamber S adhering to the front cover 4 from the inside of the lamp chamber S is prevented.

### (Lamp Body 302)

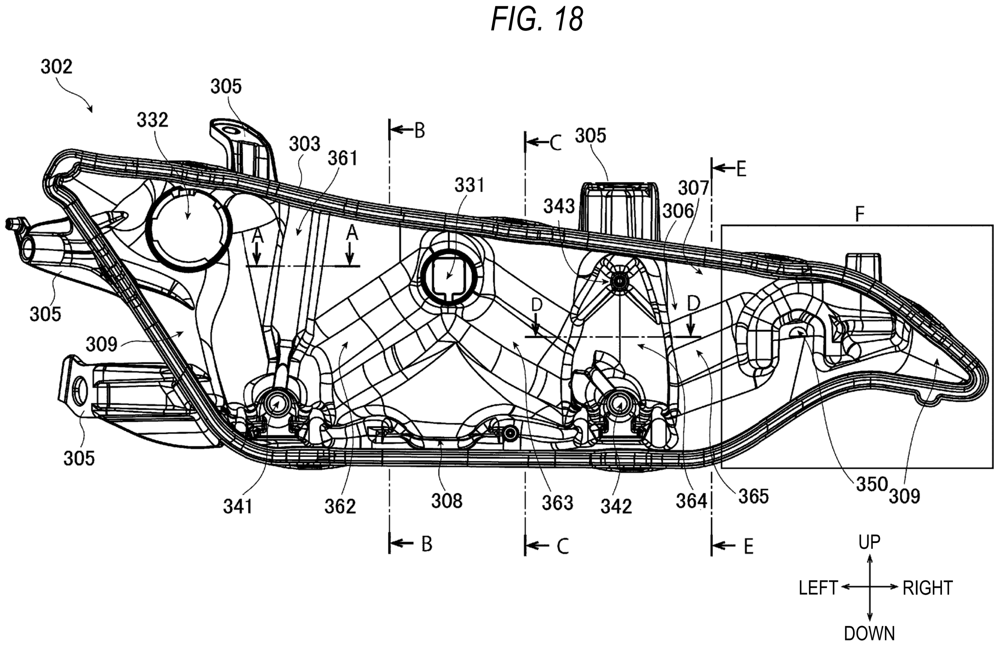

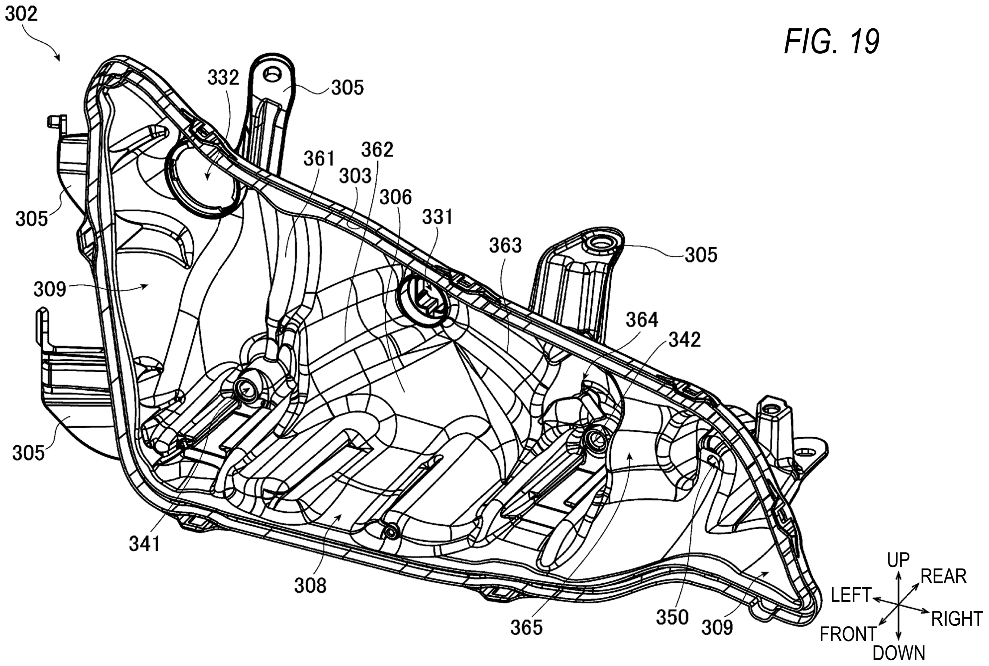

The shape of the lamp body 302 will be described in detail. FIG. 18 is a front view of the lamp body 302 shown in FIG. 17. FIG. 19 is a front perspective view of the lamp body 302 shown in FIG. 18.

A seal groove 303 for engaging with a seal leg provided on the periphery of the front cover 304 is provided around the periphery of the front opening of the lamp body 302. A bracket 305 which is a vehicle body attachment portion for attachment to the vehicle body protrudes from the outer surface of the lamp body 302 in a manner of corresponding to the shape of the attachment portion on the vehicle body side.

The lamp body 302 includes, as constituent surfaces, a back wall 306, a ceiling surface 307, a bottom surface 308, and left and right side surfaces 309 and 309. The back wall 306 bulges toward the back side, and is connected to the ceiling surface 307, the bottom surface 308, and the side surfaces 309 and 309 adjacent thereto via ridge lines. The ceiling surface 307, the bottom surface 308, and the side surfaces 309 and 309 basically have a convex curved shape that gently bulges toward the outside of the lamp body 302, are gently curved at the edge portions thereof, and are continuously coupled without any bent portions or steps. Therefore, the lamp body 302 is formed in a rounded container shape as a whole. In the fourth embodiment, the ceiling surface 307 extends from the opening of the lamp body 302 toward the back surface, but the amount of extension thereof is small. The ceiling surface 307 extends from the edge portion of the opening while gently curving downward from the back surface, is connected to the back wall 306, and is integrally formed with the back wall 306. In this way, the constituent surface of the lamp body 302 is mainly implemented by a curved surface having a large radius of curvature rather than a flat surface.

In the lamp body 302, a first unit attachment hole 331 for attaching the low beam lamp unit Lo is formed above the center of the back wall 306. A second unit attachment hole 332 for attaching the high beam lamp unit Hi is formed above the left side of the back wall 306.

In addition, a first aiming member attachment hole 341, a second aiming member attachment hole 342, and a third aiming member attachment hole 343 are formed around the first unit attachment hole 331 in the lamp body 302. An aiming member (not shown) is attached to the aiming member attachment holes 341, 342, and 343.

The first aiming member attachment hole 341 is formed between the first unit attachment hole 331 and the second unit attachment hole 332 in the left-right direction, and is formed at the lower edge portion of the back wall 306 in the upper-lower direction. The second aiming member attachment hole 342 is formed at a position that is substantially symmetrical with respect to the first aiming member attachment hole 341 in the left-right direction with the first unit attachment hole 331 as a reference. Therefore, the second aiming member attachment hole 342 is formed at the lower edge portion of the back wall 306, which is offset from the first unit attachment hole 331 to the right in the opposite direction to the left side formed with the first aiming member attachment hole 341, by substantially the same distance as the distance from the first unit attachment hole 331 to the first aiming member attachment hole 341. The third aiming member attachment hole 343 is formed above the second aiming member attachment hole 342 and at the upper end portion of the back wall 306.

Further, in the lamp body 302, a vent hole 350 is formed in a region to the right of the third aiming member attachment hole 343 and closest to the right of the back wall 306.

### (Back Wall and Beam)

A first beam 361, a second beam 362, a third beam 363, a fourth beam 364, and a fifth beam 365 constituting a part of the back wall 306 extend from the upper end portion of the back wall 306 to the lower end portion of the back wall 306. Here, a part of the back wall 306 other than the part constituted by the beams 361 to 365 is referred to as a back wall main body 369.

The first beam 361 extends straight from the first aiming member attachment hole 341 formed at the lower end portion of the back wall 306 to the upper end portion of the back wall 306 generally upward in the front view.

The second beam 362 extends from the first aiming member attachment hole 341 on the lower side to the second unit attachment hole 332 on the upper side in a manner of connecting the first aiming member attachment hole 341 and the second unit attachment hole 332 as end points. Therefore, the second beam 362 is inclined to the right in the front view.

The third beam 363 extends from the second aiming member attachment hole 342 on the lower side to the first unit attachment hole 331 on the upper side in a manner of connecting the second aiming member attachment hole 342 and the first unit attachment hole 331 as end points. Therefore, the third beam 363 is inclined to the left in the opposite direction to the second beam 362 in the front view.

The fourth beam 364 extends from the second aiming member attachment hole 342 on the lower side to the third aiming member attachment hole 343 on the upper side in a manner of connecting the second aiming member attachment hole 342 and the third aiming member attachment hole 343 as end points. Therefore, the fourth beam 364 is formed substantially vertically in the front view.

The fifth beam 365 extends from the second aiming member attachment hole 342 on the lower side to the vent hole 350 on the upper side in a manner of connecting the second aiming member attachment hole 342 and the vent hole 350 as starting points. Therefore, the fifth beam 365 is inclined to the right in the front view.

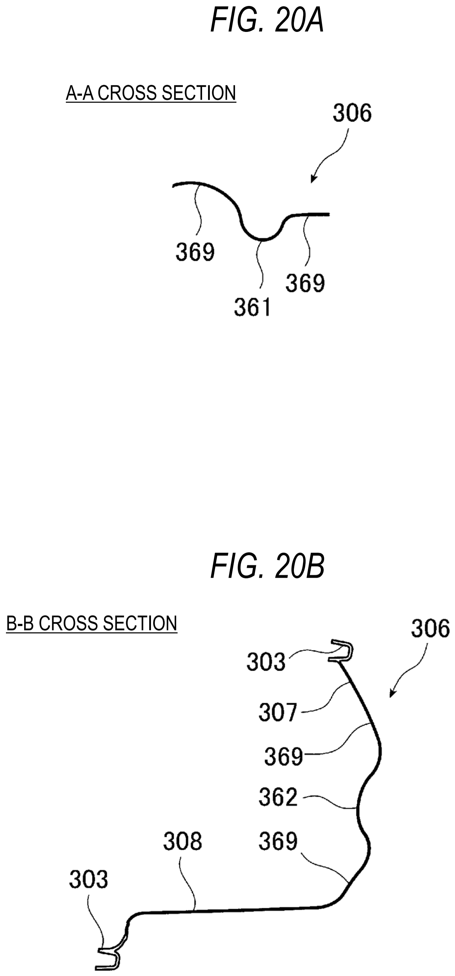

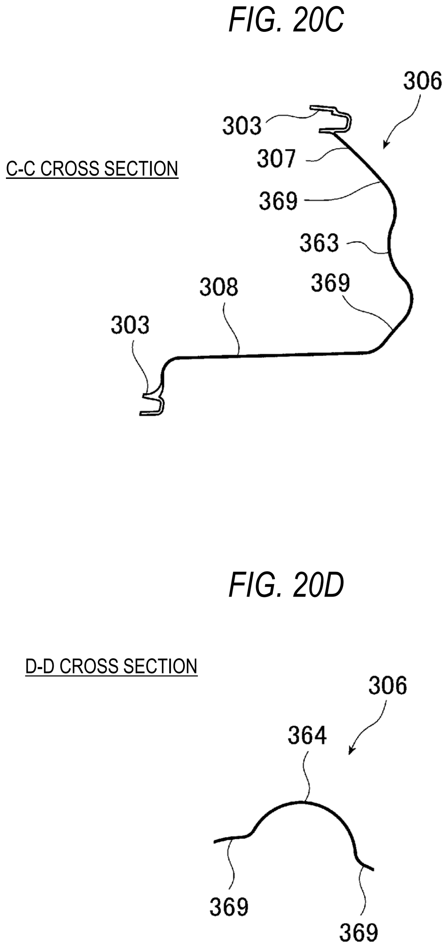

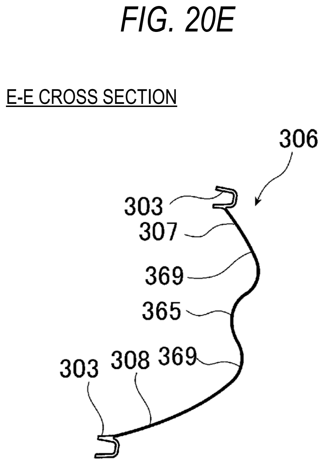

FIG. 20A to 20E are end views taken along a cutting line shown in FIG. 18. FIG. 20A is an end view taken along a line A-A in FIG. 18, and mainly shows the cross-sectional shape of the first beam 361. FIG. 20B is an end view taken along a line B-B in FIG. 18, and mainly shows the cross-sectional shape of the second beam 362. FIG. 20C is an end view taken along a line C-C in FIG. 18, and mainly shows the cross-sectional shape of the third beam 363. FIG. 20D is an end view taken along a line D-D in FIG. 18, and mainly shows the cross-sectional shape of the fourth beam 364. FIG. 20E is an end view taken along a line E-E in FIG. 18, and mainly shows the cross-sectional shape of the fifth beam 365.

As shown in FIGS. 20A to 20E, the cross-sectional shapes of the beams 361 to 365 perpendicular to the extending direction thereof are all a substantially arc shape, although differ in radius of curvature, width, and amount of protrusion. The beams 361, 362, 363, and 365 are formed such that the protruding direction of the curved surface thereof is the lamp chamber S direction (forward). The beam 364 is formed such that the curved surface and protruding direction thereof are directed toward the outside of the lamp chamber S (the back surface direction).

The beams 361 to 365 are smoothly connected to the back wall main body 369 via the ridge lines regardless of the protruding direction. The cross-sectional shape of the lamp body 302 is constructed continuously without any bent portions while maintaining a constant wall thickness.

For example, the longitudinal cross-sectional shape of the back wall 306 including the second beam 362 will be described in detail with reference to FIG. 20B. As shown in FIG. 20B, the seal groove 303 is formed at the upper edge portion of the opening of the lamp body 302 (see also FIG. 18), from which the back wall main body 369 integrated with the ceiling surface 307 extends downward from the back surface, curves forward at the boundary portion with the second beam 362, and is smoothly connected with the second beam 362. The second beam 362 extends downward, curves forward, and then curves toward the back surface again to form a substantially arc shape that bulges forward. The second beam 362 curves forward and downward at the lower edge portion, and is smoothly connected to the back wall main body 369 again. The back wall main body 369 extends forward and downward, curves toward the inside of the lamp chamber S, and is connected to the edge portion of the bottom surface 308 curved with the same curvature. The bottom surface 308 extends forward as it is, and is connected to the seal groove 303 formed at the lower edge portion of the opening of the lamp body 302. In this way, the ceiling surface 307 and the back wall main body 369, the back wall main body 369 and the second beam 362, and the back wall main body 369 and the bottom surface 308 curve and are smoothly connected with the same curvature so as not to form a bent portion or a step at the connection portions thereof.

As shown in FIGS. 20A, 20C, 20D, and 20E, the first beam 361, the third beam 363, the fourth beam 364 (the convex direction of the beam portion is the opposite direction), and the fifth beam 365 are similarly connected with the back wall main body 369 via the ridge lines. In this way, the beams 361 to 365 extend from the upper end portion to the lower end portion of the back wall 306 while maintaining the cross-sectional shape in the extending direction thereof in a substantially arc shape, and is continuously and smoothly connected with the back wall main body 369 at the end portions of the adjacent surfaces without forming a step or a corner portion.

The cross-sectional shape of the lamp body 302 implemented as described above is a wavy shape in which complicated curves are continuous. Further, the back wall 306 is similarly connected with the ceiling surface 307, the bottom surface 308, and the side surfaces 309 and 309 via the ridge lines, and at the boundary portion, both curve to the same curvature and are connected smoothly and continuously. The back wall 306, the ceiling surface 307, the bottom surface 308, and the side surfaces 309 and 309 themselves are generally curved surfaces having a large radius of curvature and gently bulging outward, and adjacent curved surfaces are smoothly continuous. Therefore, the lamp body 302 itself is mainly implemented by a curved surface, the formation of the corner portion is reduced, and the wall thickness is kept substantially constant.

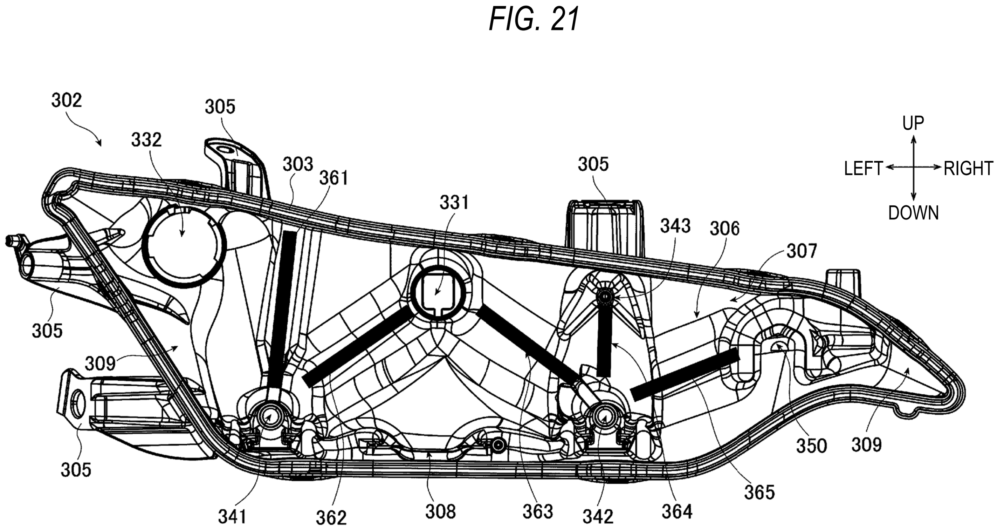

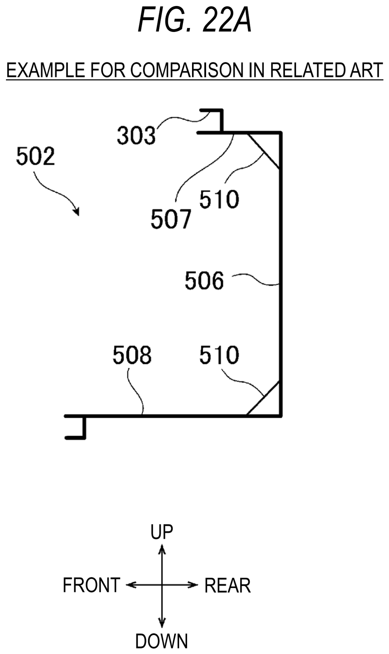

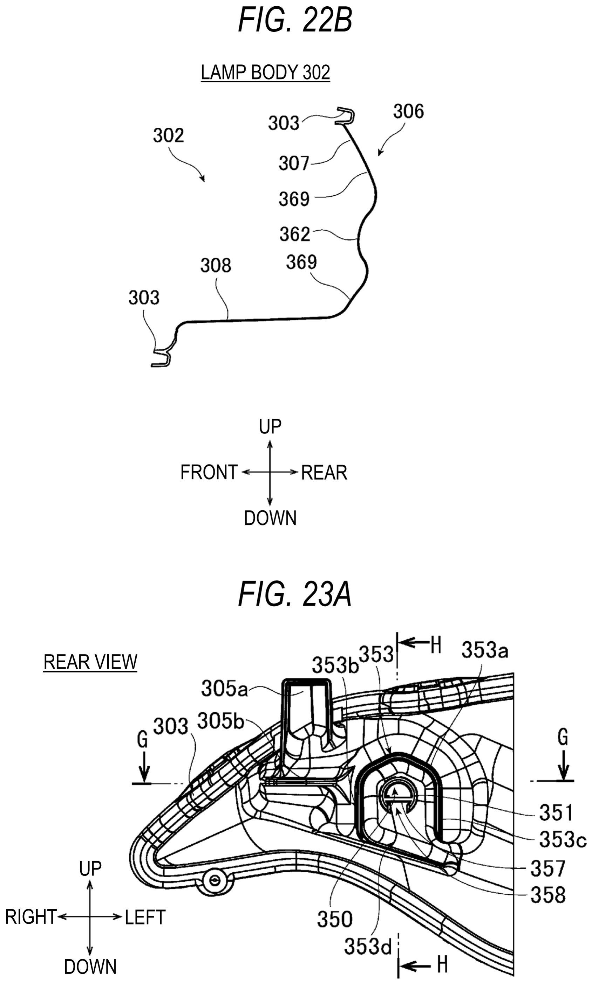

The advantageous effects of the back wall 306 and the lamp body 302 implemented as described above will be described with reference to FIGS. 21, 22A, and 22B. FIG. 21 is a front view of the lamp body 302, and shows the beams 361 to 365 of the lamp body 302 in black.

As shown in FIG. 21, the beams 361 to 365 have a truss structure in triangular units. In the truss structure, the beams 361 to 365 extend from the upper end portion to the lower end portion of the back wall 306, and one beam extends obliquely from the end portion of another beam. Therefore, the lamp body 302 including the back wall 306 has a structure that is less likely to deform under a load. Since the beams 361 to 365 themselves have curved surfaces having a substantially arc-shaped cross section to disperse stress, the beams 361 to 365 have a highly rigid structure that is more resistant to deformation. Accordingly, the rigidity of the lamp body 302 is improved, and due to the improved rigidity, the lamp body 302 can be made thinner, and the lamp body 302 can be made lighter.

In the fourth embodiment, the first unit attachment hole 331 and the aiming member attachment holes 341, 342, and 343 formed in the back wall 306 are formed at the end portions of the beams 361 to 365. The attachment holes are thicker and more rigid than other parts of the back wall 306 due to the nature of attaching other components thereto. Therefore, by using these structurally necessary components in a part of the beam, particularly at the important joint point of the beam, the rigidity of the back wall 306 and the lamp body 302 is improved. As will be described in detail later, since the vent hole 350 is provided with a waterproof wall that surrounds the vent hole 350, the vent hole 350 is a highly rigid part similar to the attachment hole.

A part of the seal groove 303 at the opening also constitutes a part of the truss structure. Similarly to the attachment hole, the seal groove 303 at the opening is thicker and more rigid than other parts due to the nature of engagement with other components (see FIG. 20B). At least a part of the seal groove 303 is used to form the truss structure together with the beams 361 to 365, thereby improving the rigidity of the lamp body 302.

Next, the advantageous effects of the shape of the lamp body 302 will be described. FIG. 22A is a vertical cross-sectional view showing a schematic diagram of a lamp body 502 having a configuration in the related art for comparison. FIG. 22B is a vertical cross-sectional view of the lamp body 302.

As shown in FIG. 22A, the lamp body 502 having a configuration in the related art includes a substantially planar back wall 506, a ceiling surface 507, and a bottom surface 508. In the lamp body 502, the ceiling surface 507 and the bottom surface 508, which are horizontal surfaces, are connected to the upper and lower end portions of the back wall 506 provided vertically. Therefore, a corner portion bent at 90 degrees is formed at the connection portion. In the corner portion in which the flat surface and the flat surface collide with each other in this way, stress concentration is likely to occur. A rib 510 is provided at the corner portion in order to prevent deformation due to stress concentration and ensure the rigidity.

On the other hand, as shown in FIG. 22B, in the lamp body 302, the back wall 306, the ceiling surface 307, and the bottom surface 308 are connected to each other via the ridge lines. In this way, the lamp body 302 is mainly implemented by a curved surface, and the adjacent surfaces are curved and connected at the same curvature at the boundary. The constituent surfaces are smoothly continuous with each other, a bent portion is not formed in the connection portion, and a corner portion due to stress concentration is not formed. By preventing the formation of the corner portion where the stress is concentrated, the stress is dispersed, and the structure is strong against deformation and has high rigidity. In the fourth embodiment, although all the constituent surfaces are connected to each other by the ridge line, it is sufficient that at least the back wall 306 is connected to any one of the ceiling surface 307, the bottom surface 308, and the side surfaces 309 and 309 via the ridge line.

Similarly, the beams 361 to 365 are connected to the back wall main body 369 via the ridge line, and are smoothly continuous with each other even at the connection portion. Therefore, the cross-sectional shape of the back wall 306 is formed in a corrugated shape without any bent portions, stress concentration on the corner portion is prevented, and the rigidity is improved. In this case, if the constituent surface is not a flat surface, the direction (the direction in which the substantially arc-shaped cross section protrudes) in which the beams 361 to 365 curve with respect to the extending direction may be either forward or backward (the back surface direction).

Since the wall thickness can be kept approximately constant even at the connection portion with a surface that tends to be thick, the weight can be reduced. In addition, the connection point of the reinforcing member such as the rib and the corner portion are thick and tend to trap heat, and thus are portions at which the molding defect is likely to occur during resin molding. By reducing the connection point and the corner portion, the molding defect can also be prevented.

### (Shape of Back Wall Around Vent Hole)

The lamp body 302 is mainly implemented by a smooth continuous curved surface, thereby improving the rigidity of the lamp body 302 and reducing the thickness of the lamp body 302. In the fourth embodiment, the entire lamp body 302 is mainly implemented by a curved surface, but it is sufficient that at least a part of the lamp body 302 is mainly implemented by a curved surface, and the rigidity can be increased using a curved surface as a constituent surface to achieve thinning. In the fourth embodiment, the periphery of the vent hole 350 formed in the back wall 306 of the lamp body 302 is mainly implemented by a curved surface, and the rigidity of the lamp body 302 can be increased and at least the peripheral portion of the vent hole 350 can be thinned using the curved surface as at least the constituent surface of the periphery of the vent hole 350.

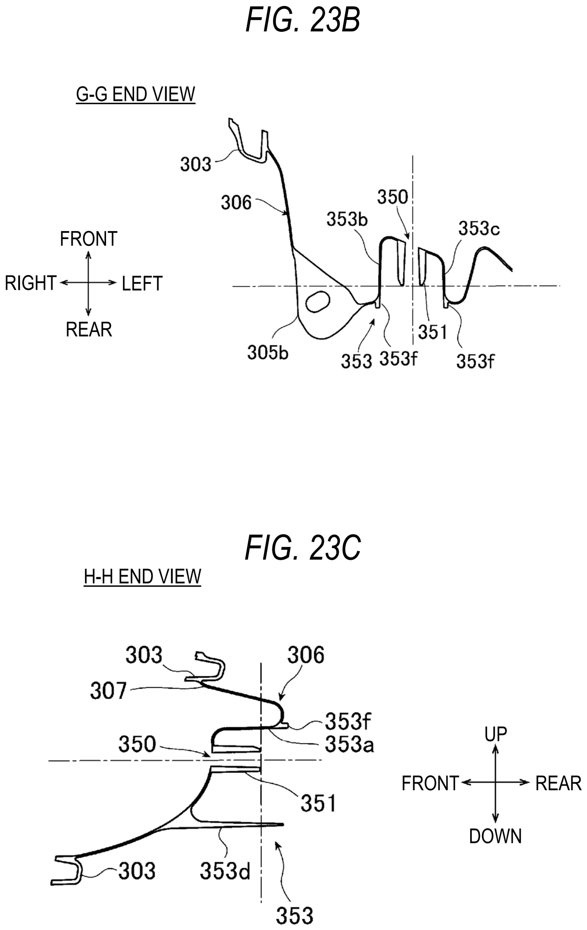

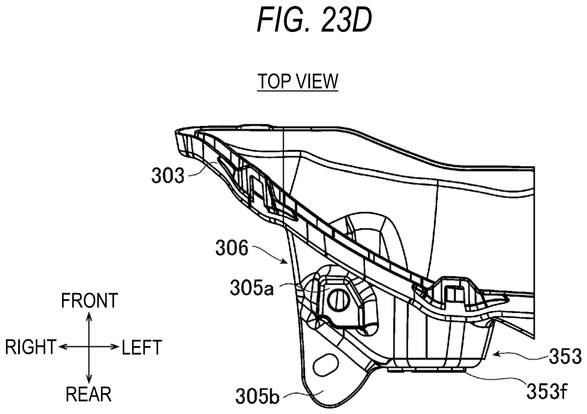

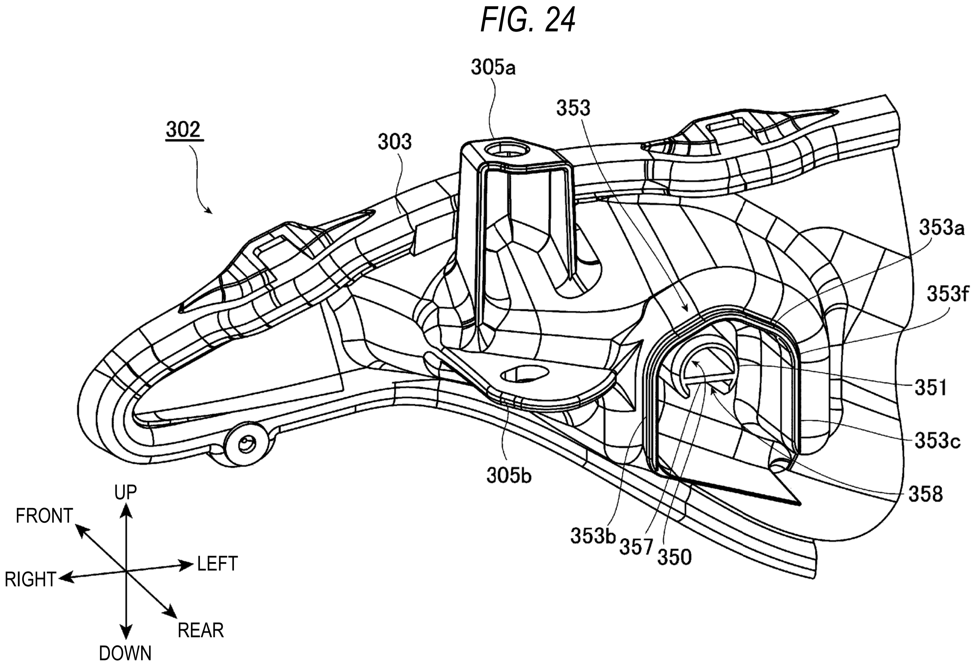

The configuration of the back wall 306 around the vent hole 350 will be described with reference to FIGS. 23A to 23D and 24. FIGS. 23A to 23D and 24 show the portion F in FIG. 18, and mainly show the vent hole 350 and the structure around the vent hole 350. FIG. 23A is a rear view of the portion F. FIG. 23B is an end view taken along a line G-G shown in FIG. 23A. FIG. 23C is an end view taken along a line H-H shown in FIG. 23A. FIG. 23D is a plan view of the portion F. FIG. 24 is a rear perspective view of the portion F. See also the front view of FIG. 18 and the front perspective view of FIG. 19.

As shown in FIGS. 23A to 23D and 24, the vent hole 350 is a through hole formed in the back wall 306, and has a semi-cylindrical shape whose upper side bulges in the rear view. The cylindrical wall 351 protrudes rearward from the back surface of the back wall 306 so as to surround the vent hole 350, and the vent hole 350 is implemented as a space on the inner side of a cylindrical wall 351.

The cylindrical wall 351 has a substantially semi-cylindrical shape whose upper side bulges, and the semi-cylindrical portion extends to a position slightly lower than the planar portion. In other words, the cylindrical wall 351 is formed in a cylindrical shape, and a partition wall 357 that partitions the internal space of the cylindrical wall 351 in the upper-lower direction is formed on the inner side of the cylindrical wall 351. On the lower side of the cylindrical wall 51, a cutout 358 opening at the lower end is formed deeply. A space sandwiched between the portions extending to a position slightly lower than the horizontal portion (the partition wall 357) of the cylindrical wall 351 is the cutout 358. Accordingly, the vent hole 350 is formed in a substantially semi-cylindrical shape.

The inner peripheral surface and the outer peripheral surface of the cylindrical wall 351 are slightly inclined with respect to the axis. That is, the inner peripheral surface moves away from the axis toward the rear end, and the outer peripheral surface approaches the axis toward the rear end.

A waterproof wall 353 is provided on the back side surface of the back wall 306 on which the cylindrical wall 351 is provided so as to surround the cylindrical wall 351 at a position separated from the cylindrical wall 351 to some extent in the vent hole 350. The waterproof wall 353 protrudes rearward, and the rear distal end portion of the waterproof wall 353 that protrudes rearward is located further rearward than the rearmost end portion of the cylindrical wall 351 that protrudes furthest to the rear.

As shown in FIG. 23A, in the rear view, the waterproof wall 353 includes an eave portion 353a bulging upward, a right side surface 353b extending straight downward from the right end point of the eave portion 353a, a left side surface 353c extending straight downward from the left end point of the eave portion 353a, and a lower inclined surface 353d extending obliquely downward and leftward from the lower end point of the right side surface 353b. The lower inclined surface 353d extends from the lower end point of the left side surface 353c to the lower extension line, and the waterproof wall 353 has a surrounding form in which a portion provided at the lowest position is opened.

The cylindrical wall 351 and the waterproof wall 353 make it difficult for water to enter the lamp chamber S through the vent hole 350. Even when water adheres to the cylindrical wall 351 or the waterproof wall 353, the water quickly flows down due to the opening of the waterproof wall 353 or the gradient of the cylindrical wall 351.

As shown in FIGS. 23B and 23C, the waterproof wall 353 protrudes from the back wall 306 toward the back surface, and at least a part (in the fourth embodiment, the base end sides of the eave portion 353a, the right side surface 353b, and the left side surface 353c) of the waterproof wall 353 also constitutes the back wall 306 of the lamp body 302.

A direction in which the cylindrical wall 351 is surrounded by the waterproof wall 353 is defined as an inner side, and the opposite direction is defined as an outer side. The eave portion 353a, the right side surface 353b, and the left side surface 353c are wall surfaces protruding rearward from the back side surface of the back wall 306, and as the eave portion 353a, the right side surface 353b, and the left side surface 353c protrude (extend) rearward, curved surfaces protrude outward from the outer surfaces thereof. These curved surfaces are curved and extend so as to be folded back to the base end portion sides (forward) of the eave portion 353a, the right side surface 353b, and the left side surface 353c, and constitute a part of the back wall 306.

In other words, the back wall 306 around the outer sides of the eave portion 353a, the right side surface 353b, and the left side surface 353c extends to be curved rearward from a position separated from the waterproof wall 353 to some extent, and then is further curved toward the waterproof wall 353 and connected to the outer surfaces of the eave portion 353a, the right side surface 353b, and the left side surface 353c. In each of the eave portion 353a, the right side surface 353b, and the left side surface 353c, a part of the back wall 306 is formed from a portion to which the back wall 306 is connected to the base end portion thereof. The back wall 306, which is the eave portion 353a, the right side surface 353b, and the left side surface 353c, is further curved toward the inner side of the waterproof wall 353 at the base end portion thereof, and constitutes the back wall 6 on the inner side of the waterproof wall 353.

Since the lamp body 302 is implemented as described above, when the lamp body 302 is viewed from the front, the lamp body 302 around the vent hole 350 appears to have a recess formed at a position separated from the vent hole 350 to some extent with the vent hole 350 as the center. When the lamp body 302 is viewed from the rear, the lamp body 32 around the vent hole 350 appears to be raised rearward. An uneven portion with the vent hole 350 as the center is formed in the lamp body 302.

### (Advantageous Effects)

With the above configuration, the back wall 306 around the vent hole 350 can be formed of a curved surface. When the lamp body 302 is formed of a curved surface rather than a flat surface, the bending moment can be improved and the rigidity can be increased, so that the lamp body 302 can be thinned. With the above configuration, it is possible to increase the rigidity of at least the back wall 306 around the vent hole 350, and even if the wall thickness of the back wall 306 around the vent hole 350 is small, it is possible to ensure the same degree of rigidity as in the related art.

In the fourth embodiment, the back wall 306 is implemented such that the back wall 306 around the eave portion 353a, the right side surface 353b, and the left side surface 353c is a curved surface, but the present invention is not limited thereto. In at least a part of the waterproof wall 353, a curved surface may protrude outward from the outer surface of the waterproof wall 353 in the middle of protruding rearward, and the curved surface may be extended so as to be curved and folded back to the base end portion side of the waterproof wall 353 to constitute a part of the back wall 306. In other words, the curved surface protruding outward from the waterproof wall 353 is the back wall 306, and the curved back wall 306 is connected to the outer surface of the waterproof wall 353.

The curved surface (the back wall 306) protrudes outward in the middle of the rearward protrusion of the waterproof wall 353, and the curved surface is curved and folded back to the base end portion side. When the curved surface protrudes from the waterproof wall 353, it is preferable that the curved surface extends to the outside of the distal end (the rear side) of the waterproof wall 353 once, and then extends so as to be curved and folded back to the base end portion side of the waterproof wall 353 to constitute a part of the back wall 306. By forming the back wall 306 by bending the curved surface twice, the number of curved surfaces forming the back wall 306 can be increased, and the rigidity of the lamp body 302 can be further increased.

In the fourth embodiment, the back wall 306 protrudes from the outer surface in the middle of protrusion (in the middle of extension), not from the distal ends of the rearward protrusions of the eave portion 353a, the right side surface 353b, and the left side surface 353c. In other words, a part of the back wall 306 is connected to the side surface of the waterproof wall 353 in the middle of the back protrusion. This is to ensure the degree of freedom in design and the function of the waterproof wall 353. If a part of the back wall 306 is connected to the distal end of the rearward protrusion of the waterproof wall 353, the entire waterproof wall 353 at that part also constitutes the back wall 306. The waterproof wall 353 has a necessary configuration such as an inclination or a gradient in order to prevent water from entering, but when the waterproof wall 353 completely becomes the back wall 306, a problem is likely to occur when the configuration necessary as the back wall 306 is contrary to the configuration necessary as the waterproof wall 353. In order to ensure a degree of freedom in design, it is preferable that the back wall 306 is connected to a part of the side surface of the waterproof wall 353 instead of the protruding distal end of the waterproof wall 353.

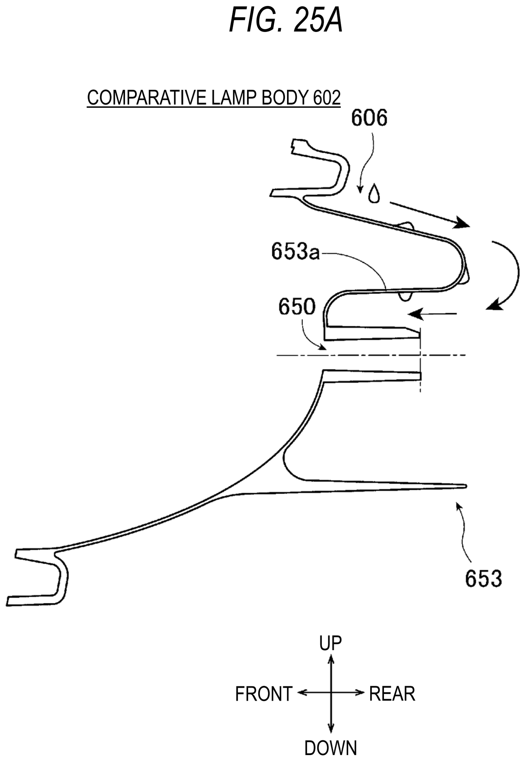

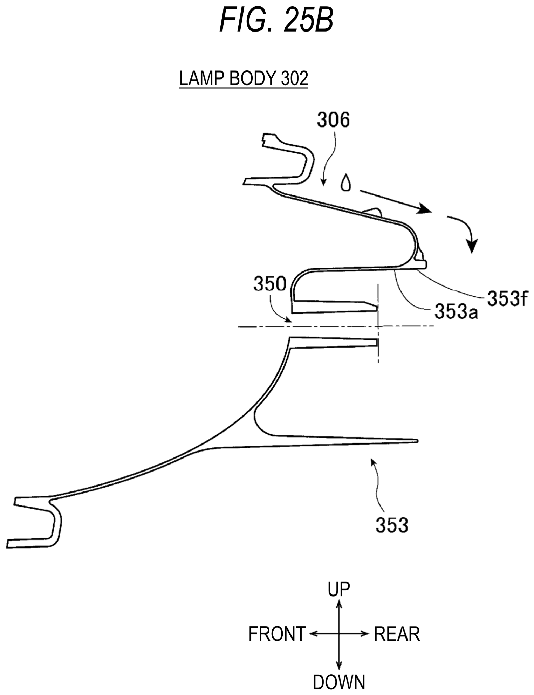

When the curved back wall 306 is connected to the outer surface of the waterproof wall 353 in the middle of the rearward protrusion, the base end side from the connection portion of the waterproof wall 353 constitutes the waterproof wall 353 and the back wall 36 integrally with the back wall 306, and the distal end side from the connection portion constitutes the waterproof wall 353. Here, in the waterproof wall 353, a portion from the connection portion with the back wall 306 to the protruding distal end is referred to as a waterproof wall distal end portion 353f. In this case, in order to prevent water from entering the vent hole 350, it is preferable that the waterproof wall distal end portion 353f be present. That is, it is preferable that the curved back wall 306 is connected to the middle of the rearward protrusion rather than being connected to the rearward protrusion distal end of the waterproof wall 353. This will be described with reference to FIGS. 25A and 25B. FIG. 25A shows a lamp body 602 for comparison. FIG. 25B shows the lamp body 302 according to the fourth embodiment. Arrows in FIGS. 25A and 25B indicate the flow of water.

As shown in FIG. 25A, a back wall 606 of the lamp body 602 is integrated with an eave portion 653a of a waterproof wall 653, and the entire eave portion 653a is formed of a curved surface. In other words, a part of the back wall 606 is curved and connected to the distal end of the eave portion 653a to form the eave portion 653a.

Since the entire eave portion 653a is a curved surface, the water adhering to the surface of the eave portion 653a flows along the eave portion 653a to the inner side of the waterproof wall 653. Even if the eave portion 653a is flat, it is necessary to provide a draft angle during injection molding. Since the eave portion 653a is slightly inclined inward, water that has fallen to the upper portion of the eave portion 653a runs along the inner side of the eave portion 653a from the back wall 606 as it is, and is likely to flow into the inner side of the waterproof wall 653. In this way, when the back wall 606 is connected to the distal end of the eave portion 653a, the waterproof function of the waterproof wall 653 deteriorates.

On the other hand, as shown in FIG. 25B, in the lamp body 302 according to the fourth embodiment, the back wall 306 is connected to the outer surface of the eave portion 353a in the middle of the rearward extension, and the waterproof wall distal end portion 353f is formed at the distal end of the eave portion 353a. By providing the waterproof wall distal end portion 353f, water that adheres to the back wall 306 connected to the eave portion 353a is blocked by the waterproof wall distal end portion 353f even if the water flows toward the eave portion 353a. The waterproof wall distal end portion 353f prevents water from flowing into the inside of the eave portion 353a. By providing the waterproof wall distal end portion 353f, the back wall 306 around the vent hole 350 is curved to increase the rigidity, and the function as a waterproof wall is ensured.

The waterproof wall 353 surrounds the cylindrical wall 351 while being separated from the cylindrical wall 351 forming the vent hole 350 and extends to the rear of the lamp body 302, the curved surface constituting the back wall 306 may be connected to at least a part of the waterproof wall 353, and the curved surface constituting the back wall 306 may be connected to only a part of the wall surface (the eave portion 353a, the right side surface 353b, the left side surface 353c, and the lower inclined surface 353d) constituting the waterproof wall 353, for example, only the upper half of the left side surface.

### (Bracket)

As shown in FIGS. 23A to 23D and 24, the two brackets 305 for attaching the vehicle lamp 301 shown in FIG. 17 to the vehicle body are provided in the vicinity of the waterproof wall 353 of the lamp body 302. These are referred to as a first bracket 305a and a second bracket 305b. The first bracket 305a protrudes upward on the upper right side of the waterproof wall 353. The second bracket 305b is provided on the right side of the waterproof wall 353 and below the first bracket 305a.

The second bracket 305b is formed in a flat plate shape formed with an elongated hole, and is provided horizontally so as to protrude rearward from the back wall 306. As shown in FIGS. 23B and 24, the left base end portion of the second bracket 305b is connected to the right side surface 353b of the waterproof wall 353 and is integrated with the waterproof wall 353. Since the second bracket 305b is a bracket for vehicle attachment, the second bracket 305b is formed thick and has high rigidity. Since at least a part of the second bracket 305b having high rigidity is integrated with the waterproof wall 353, the rigidity of the waterproof wall 353 and the rigidity of the back wall 306 around the waterproof wall 353 are improved. Accordingly, the thickness of the back wall 306 can be further reduced.

Although the preferred embodiment of the present invention has been described above, the above embodiment is an example of the present invention. It is possible to combine these embodiments based on the knowledge of those skilled in the art, and such forms are also included within the scope of the present invention.

The present application is based on Japanese Patent Application No. 2023-6328 filed on January 19, 2023, Japanese Patent Application No. 2023-6542 filed on January 19, 2023, Japanese Patent Application No. 2022-212060 filed on December 28, 2022, and Japanese Patent Application No. 2022-211963 filed on December 28, 2022, the contents of which are incorporated herein by reference.

## Claims

1. A vehicle lamp comprising:
a lamp body having a container shape and formed with a front opening; and
a front cover that is assembled to the front opening of the lamp body and that defines a lamp chamber inside,
wherein a tubular body protrudes from a configuration surface configuring the lamp body, and
wherein the configuration surface protrudes from a region that is at least a part of an outer peripheral side surface of the tubular body and extends to be curved to a base end side or a distal end side of the tubular body.

2. The vehicle lamp according to claim 1,
wherein the configuration surface is an attachment portion protruding from a wall surface of the lamp body, and
wherein the region is formed between the tubular body and the wall surface.

3. The vehicle lamp according to claim 1 or 2,
wherein the region is formed at a plurality of locations separated with respect to a central axis of the tubular body in a circumferential direction.

4. A vehicle lamp comprising:
a lamp body having a front opening;
a front lens that is attached to the front opening of the lamp body and that forms a lamp chamber inside the lamp body; and
a bracket provided on the lamp body as an attachment portion to a vehicle body,
wherein the bracket includes a main body portion coupled to the lamp body, and an attachment portion engaged with the vehicle body, and
wherein a base end portion of the main body portion is formed as a Y-shaped base end portion having a Y-shaped vertical cross section, and is integrally formed with a curved surface portion of the lamp body.

5. The vehicle lamp according to claim 4,
wherein a seal portion is provided in the front opening of the lamp body, and
wherein the main body portion is integrally formed with the seal portion.

6. The vehicle lamp according to claim 4 or 5,
wherein the main body portion of the bracket is integrally formed so as to be continuous with a boss portion for attaching the front lens.

7. A vehicle lamp comprising:
a lamp body having a front end opening;
a front cover that is attached to the front end opening of the lamp body and that forms a lamp chamber inside the lamp body; and
a bracket provided on the lamp body as an attachment portion to a vehicle body,
wherein the bracket includes a main body portion coupled to the lamp body and an attachment portion engaged with the vehicle body,
wherein the main body portion includes a semi-cylindrical portion that has a semi-cylindrical shape in cross section and that includes a curved portion in at least a part of the semi-cylindrical portion, and
wherein a base end portion of the semi-cylindrical portion is integrally formed on a curved surface of the lamp body.

8. The vehicle lamp according to claim 7,
wherein a seal portion is provided in the front end opening of the lamp body, and
wherein the semi-cylindrical portion is integrally formed with the seal portion.

9. The vehicle lamp according to claim 7 or 8,
wherein the semi-cylindrical portion is configured as a plurality of continuous semi-cylindrical portions in which a convex semi-cylindrical portion and a concave semi-cylindrical portion are alternately and continuously formed, and
wherein a front end portion of the concave semi-cylindrical portion is integrally formed with the seal portion.

10. The vehicle lamp according to claim 9,
wherein a drain hole is formed in a base end portion of the concave semi-cylindrical portion.

11. The vehicle lamp according to claim 10,
wherein the base end portion of the concave semi-cylindrical portion is integrally formed with an inclined curved surface of the lamp body, and
wherein the drain hole is continuous with a lowermost portion of the inclined curved surface.

12. A vehicle lamp comprising:
a lamp body having a container shape with an open front surface; and
a front cover that is assembled to a front opening of the lamp body and that defines a lamp chamber inside,
wherein a back wall of the lamp body is formed with a vent hole forming an air passage for communicating an inside and an outside of the lamp chamber, and a cylindrical wall extending rearward of the lamp body so as to surround the vent hole,
wherein the back wall is formed with a waterproof wall that surrounds the cylindrical wall while being separated from the cylindrical wall and that extends rearward of the lamp body, and
wherein at least a part of the waterproof wall has a curved surface protruding from a side surface in a middle of extension to a back surface, and the curved surface extends so as to be folded back to a base end portion side of the waterproof wall to constitute a part of the back wall.

13. The vehicle lamp according to claim 12,
wherein a bracket for vehicle attachment protrudes from at least a part of a surface of the curved surface protruding from the waterproof wall, and the bracket and the waterproof wall are integrally implemented.

14. The vehicle lamp according to claim 12 or 13,
wherein the curved surface extends toward a front side of the waterproof wall once, and then extends so as to be folded back and curved to a base end portion side of the waterproof wall to constitute a part of the back wall.
